# EUROPEAN PATENT SPECIFICATION

(11) **EP 0 867 608 B1**
(45) Date of publication and mention of the grant of the patent: **06.11.2002**
(21) Application number: 98105656.7
(22) Date of filing: 27.03.1998
(51) Int. Cl.: F02D 9/02

(54) **Air intake apparatus for a four-cycle internal combustion engine**
Lufteinlasssystem für eine Viertaktbrennkraftmaschine
Appareil d'admission d'air pour un moteur à combustion interne du type à quatre temps

(30) Priority: 27.03.1997 JP 7581997; 30.05.1997 JP 14231397; 03.07.1997 JP 17851097; 14.07.1997 JP 18814397
(43) Date of publication of application: 30.09.1998
(73) Proprietor: YAMAHA HATSUDOKI KABUSHIKI KAISHA, Iwata-shi Shizuoka-ken, 438 (JP)
(72) Inventor: Hagasaka, Hideaki, Iwata-shi, Shizuoka-ken (JP); Samoto, Haruhiko, Iwata-shi, Shizuoka-ken (JP); Yashiro, Yoshinobu, Iwata-shi, Shizuoka-ken (JP); Higaki, Yoshiyuki, Iwata-shi, Shizuoka-ken (JP); Sano, Fumimoto, Iwata-shi, Shizuoka-ken (JP)
(74) Representative: Grünecker, Kinkeldey, Stockmair & Schwanhäusser Anwaltssozietät

(56) References cited:
- EP-A- 0 459 374
- EP-A- 0 856 649
- DE-A- 2 056 748
- DE-A- 3 028 244
- GB-A- 1 556 998
- US-A- 4 264 537
- US-A- 4 922 876
- US-A- 5 063 899
- PATENT ABSTRACTS OF JAPAN vol. 8, no. 96 (M-294), 4 May 1984 & JP 59 012122 A (MIKUNI KOGYO), 21 January 1984
- PATENT ABSTRACTS OF JAPAN vol. 7, no. 95 (M-209) [1240], 21 April 1983 & JP 58 018555 A (HITACHI), 3 February 1983

## Description

The present invention relates to a four-cycle internal combustion engine according to the preamble of claim 1.

One means of increasing the output from four-cycle engines in the prior art was to set a large time interval when both the air intake valves and exhaust valves were open, the so-called "overlap." Such lengthening of the opening interval for the air intake valves is a method that increases the amount of air intake when the engine is in the high speed operating range.

When engines employ a high overlap setting, however, it is necessary, especially in the low speed operating range such as when idling, to control the fuel concentration to obtain an air/fuel ratio that is richer than the theoretical air/fuel ratio (λ = 1).

On the other hand, efficient cleansing of the exhaust gases by a three-element catalyst requires operations at the theoretical air/fuel ratio. Accordingly, when an O₂ sensor is being used to provide feedback control for the cleansing of the exhaust gases emitted by the engine, it is necessary to have a broad range of stable engine operations at the theoretical air/fuel ratio, which makes it difficult to employ the above described high overlap. The current situation is that it is difficult to simultaneously achieve higher output, efficient exhaust cleansing, and low fuel consumption.

The present applicants have internally previously developed and proposed four-cycle engines which minimize the volume ratio, that is the port volume, constituted by the volume from the air intake valve openings up to the throttle valve in the air intake passage, to the stroke volume, constituted by the displacement of each cylinder. So doing prevents diminished output, and at the same time provides a low cost method of cleansing the exhaust gases.

The four-cycle engines in the above proposal use a volume ratio set between 0.15 and 0.45, which was considerably smaller than conventionally used. To realize such ratios, it is necessary to locate the throttle valves in closer proximity to the air intake valve openings.

Further, the operational control of such engines requires the use of a throttle sensor to detect the aperture of the throttle valve as a means of estimating the engine load based on the throttle valve aperture.

However, when the foregoing throttle valve is placed closer to the air intake valve openings, the amount of air intake responds in excessively sensitive manner to the throttle valve aperture. As a result, for example when the throttle valve is rapidly opened under no load conditions to race the engine (air blow out), there is an acute rise in air intake without any delay in response because of this sensitivity to the throttle valve aperture. The fuel, due to its having a higher specific gravity than air, is delayed in its increase compared with the increase in air, and as a result, loss of fire can occur during the initial period of throttle manipulation under no load racing. Such a condition can detract from the operational feel of the engine.

Engines according to the foregoing proposal, as a result of placing the throttle valves in closer proximity to the air intake valve openings, depending upon the placement of the fuel injection valves, can allow fuel to adhere to the air intake passage walls, thereby possibly further delaying the fuel response characteristics. Again, it is possible for the injected fuel from the fuel injection valves to be inadequately atomized, which further detracts from the combustion properties and operation feel of the engine.

There are examples wherein the throttle sensor mentioned above can be used to change the aperture of the throttle valve, but in order for the operational control of engines to evince to a high degree of accuracy, it is necessary to have highly precise output characteristics with excellent linear characteristics; high costs become the overriding issue in such designs.

However, basically the same problems arise with four-cycle engines, the throttle valves of which are not located in closer proximity to the air intake valve openings.

Prior art document EP-0-856 649 A2 constitutes a non-prepublished prior art document according to Article 54(3) EPC with regard to the present invention. Said document teaches a four-cycle internal combustion engine with an air intake apparatus comprising an air intake passage. Said air intake apparatus is provided with a throttle valve and a fuel injection valve provided upstream with regard to said throttle valve on a side surface of said intake passage. A damping valve is provided within said air intake passage, wherein a variable gap is provided between a side surface of said intake passage on a side which opposes said side provided with the fuel injection valve.

From prior art document US 4 264 537 a variable venturi type carburetor of an internal combustion engine is known. Said venturi type carburetor comprises a damping valve with a movable piston and a fuel injection valve which are facing each other to provide a variable gap between an end surface of said movable piston and the nozzle opening of said fuel injection valve. Said variable venturi type arrangement, constituted by the movable piston and the fuel injection valve, is provided upstream with regard to a throttle valve.

An internal combustion engine with an air intake apparatus can be taken from prior art document DE-A-20 56 748. Said intake apparatus comprises an intake passage with a main throttle valve. Upstream, with regard to said main throttle valve, an additional throttle valve is provided. Said further throttle valve serves as some kind of damping valve with regard to the air which flows through said intake passage. Said further throttle valve comprises a movable piston, wherein an end face of said piston faces a side surface of the intake passage to provide a variable gap for the intake air between said side surface of the intake passage and said piston. Downstream, with regard to the main throttle valve, a fuel injection valve is provided at a further side surface of said intake passage. Said side surface of the intake passage, providing said variable gap, is opposite to the side surface of the intake passage provided with the fuel injection valve.

It is an objective of the present invention to provide an internal combustion engine having a high and accurate operation control with simple technical means.

According to the present invention said objective is solved by a four-cycle internal combustion engine having the features of independent claim 1.

Since damping valves which can change the cross section of the air intake passage according to the air intake conditions are placed upstream of the throttle valves in the air intake passages, when the throttle valve is rapidly opened, the negative pressure inside the air intake passage becomes greater than the bias in the closed direction on the damping valve, causing it to open while creating impedance in the air intake passage. Thereby the increased air speed of the intake air that was caused by the rapid opening of the throttle valve will drop. Accordingly, even under no load engine racing conditions, an excessive increase in the amount of air intake is inhibited, resulting in a moderation of the delay in the fuel response, and inhibiting the loss of fire and diminished operational feel of the engine.

Here, as a method of improving the foregoing fuel response, a so-called accelerated addition amount has been used to increase the volume of fuel that is injected, based upon the engine RPM and throttle aperture when the engine is rapidly accelerated. However, this method tends to degrade both fuel economy and exhaust emissions. In the case of an embodiment, it is possible to decrease the magnitude of the increase of fuel used during acceleration, and thereby inhibit the degradation of fuel economy and exhaust emissions.

In the case of an embodiment, it is possible to decrease the magnitude of the increase of fuel used during acceleration, and thereby inhibit the degradation of fuel economy and exhaust emissions.

Preferred embodiments of the invention are laid down in the dependent claims.

According to a preferred embodiment of the invention, a plurality of throttle valve bodies each equipped with a throttle valve and a fuel injection valve and are unitized with a common fuel supply manifold. A fuel filter and fuel pressure regulator valve are attached to this fuel supply manifold to constitute a unitized air intake apparatus. Even in multi-cylinder applications, just one of such air intake apparatus units needs to be assembled onto the engine. This design facilitates the assembly of the engine.

Furthermore, the unitization of the air intake apparatus can easily be used to make the apparatus more compact, which is especially useful on engines for motor-cycles or other applications where it is difficult to secure the required space for their mounting.

According to a preferred embodiment of the invention, since the air intake passages rise on the cylinder axis side, and since the foregoing damping valves are placed in the ceilings of the foregoing air intake passages, the air intake apparatus can be made more compact even while including the damping valves. Furthermore, it is possible to mount the fuel supply manifold that supplies the high pressure fuel to the fuel injection valves in the corner formed by the bottom surface of the air cleaner, which is connected to the upstream end of the air intake passage and by the wall surface of the fuel tank. This effect makes it possible to make the overall engine more compact, which is especially useful in engines for motorcycles.

According to a still further embodiment of the invention, a throttle sensor, which detects the throttle valve's aperture, and an ECU case housing the ECU that provides operational control of the engine, are mounted on a throttle body that houses a throttle valve. This assembly of the throttle sensor, ECU and throttle valve can be put together before mounting, and the output characteristics of the throttle sensor can be checked and stored in the ECU's memory in order to make it possible for the ECU to correct the output from the throttle sensor to match standard values. This results in excellent linear characteristics in the output properties for the throttle sensor without having to result to costly, high accuracy specifications. Inexpensive throttle sensors may be employed in this application.

Further, is was necessary in the prior art for fine adjustment to be made in the output of the throttle sensors in order to standardize their output values per unit time when the throttle valves were fully closed or opened to a specific aperture. The implementation of this kind of embodiment would make it unnecessary to perform these fine adjustments.

Further still, since the throttle sensor and ECU case are unitized as a control unit, lengthy wiring to connect the ECU with the sensor is rendered unnecessary, and the control unit can be easily attached to the engines already after having been assembled with the throttle body. Thus, the engine assembly is greatly facilitated by attaching the throttle sensor and ECU case to a throttle body.

According to a preferred embodiment of the invention, in structures that utilize the pressure from the running air (ram air pressure) to increase the filling rate, this ram air pressure is introduced into the positive pressure chamber of the operating chamber of the damping valve, thereby making it possible to cancel out the bad influence of the ram air pressure on the aperture of the damping valve during high speed engine operations. and to achieve good response by the intake air to the operation of the throttle valve.

Preferably, the damping valve is configured so that the free piston embeds in the air intake passage in a manner that tilts toward the downstream side, reducing the air pressure friction on the free piston to facilitate the smooth operation of the piston. Further, this means that the top of the damping valve is positioned farther from the head cover, making it possible to locate said damping valve, and by extension, the throttle valve, in closer proximity to the engine side, thereby enabling the further reduction of the port volume and the volume ratio. This design results in improving exhaust cleansing without lowering the engine output.

Preferably, at least a part of the throttle sensor, when viewed in the crankshaft direction, overlaps the chain chamber, making it possible to place the throttle sensor, and by extension, the throttle valve, in closer proximity to the air intake valve openings. Further, when viewed in the cylinder axis direction, the throttle sensor lies on the inside of the chain chamber in the camshaft direction, preventing interference between the throttle sensor and the chain chamber when the throttle valve is located in close proximity to the air intake valve openings, and facilitating the further lowering of the port volume and volume ratio as a means to cleanse the exhaust gases without causing the engine output to decline.

Preferably, according to an embodiment that does not conform with all of the features of independent claim 1, the attachment angle of the foregoing throttle sensor is variable around the valve shaft, allowing the adjustment of the minimum aperture of the throttle valve to be performed after the adjustment of the idling RPM, thereby making it possible to standardize (zero) the throttle valve aperture by the adjustment angle of the sensor's attachment. This design improves the detection accuracy of the throttle valve aperture.

Other preferred embodiments of the present invention are laid down in further dependent claims.

In the following, the present invention is explained in greater detail with respect to several embodiments thereof in conjunction with the accompanying drawings, wherein:
Figure 1 is an overall view of a first embodiment of an air intake apparatus for four-cycle engines. Said first embodiment does not conform with all of the features of independent claim 1 but explains features in view the subject-matter of the present invention.
Figure 2 is a top view showing the mounted the cylinder block and throttle body areas on the engine of the foregoing first embodiment.
Figure 3 is a diagram showing the shape of the air intake ports on the foregoing first embodiment of the engine.
Figure 4 is a sectional side view of the first embodiment of the engine.
Figure 5 is a sectional top view (along line V-V of Figure 4) of the foregoing first embodiment of the engine.
Figure 6 is a sectional top view of the air intake system for the foregoing first embodiment of the engine.
Figure 7 is a sectional view (along line VII-VII of Figure 6) of an air intake passage of the foregoing first embodiment of the engine
Figure 8 is a sectional top view of the air intake system for the foregoing first embodiment of the engine.
Figure 9 is a block diagram of a test apparatus for the engine of the foregoing first embodiment.
Figure 10 is a graph of the throttle aperture and the output from the throttle sensor of the foregoing first embodiment of the engine.
Figure 11 is a block diagram showing the operation of the engine test apparatus of the foregoing first embodiment.
Figure 12 is a block diagram showing the operation of the engine test apparatus of the foregoing first embodiment.
Figure 13 is a sectional side view of the engine air intake system of a second embodiment. Said second embodiment does not conform with all of the features of independent claim 1 but explains features in view of the subject-matter of the present invention.
Figure 14 is a sectional top view of the foregoing second embodiment.
Figure 15 is a sectional top view of the air intake system of a modification of the foregoing first embodiment; this modification does not conform with all of the features of independent claim 1.
Figure 16 is a sectional side view of the engine air intake apparatus according to a third embodiment which conforms with the present invention and shows all of the features of independent claim 1.
Figure 17 is a bottom view (in the direction of arrow A of Figure 18) of the engine air intake apparatus for a fourth embodiment. Said fourth embodiment does not conform with all of the features of independent claim 1 but explains features in view of the subject-matter of the present invention.
Figure 18 is a side view of the apparatus of the foregoing fourth embodiment.
Figure 19 is a sectional side view of the engine air intake apparatus for a fifth embodiment. Said fifth embodiment does not conform with all of the features of independent claim 1 but explains features in view of the subject-matter of the present invention.
Figure 20 is a side view of a motorcycle equipped with the foregoing fifth embodiment.
Figure 21 is a sectional top view of the engine air intake apparatus of a sixth embodiment. Said sixth embodiment does not conform with all of the features of independent claim 1 but explains features in view of the subject-matter of the present invention.
Figure 22 is a sectional side view of the engine air intake apparatus of an seventh embodiment. Said seventh embodiment does not conform with all of the features of independent claim 1 but explains features in view of the subject-matter of the present invention.
Figure 23 is a sectional view of the engine air intake apparatus of an eighth embodiment. Said eighth embodiment does not conform with all of the features of independent claim 1 but explains features in view of the subject-matter of the present invention.
Figure 24 is a sectional view of the engine air intake apparatus of a ninth embodiment. Said ninth embodiment conforms with all of the features of independent claim 1.
Figure 25 is a sectional side view of the engine air intake apparatus of a tenth embodiment. Said tenth embodiment does not conform with all of the features of independent claim 1 but explains features in view of the subject-matter of the present invention.
Figure 26 is a sectional side view of the engine air intake apparatus of an eleventh embodiment. Said eleventh embodiment does not conform with all of the features of independent claim 1 but explains features in view of the subject-matter of the present invention.
Figure 27 is a sectional side view of the engine air intake apparatus of a twelfth embodiment. Said twelfth embodiment does not conform with all of the features of independent claim 1 but explains features in view of the subject-matter of the present invention.
Figure 28 is a back view showing the position of the throttle sensor in the foregoing twelfth embodiment.
Figure 29 is a sectional side view of the engine air intake apparatus of a thirteenth embodiment. Said thirteenth embodiment does not conform with all of the features of independent claim 1 but explains features in view of the subject-matter of the present invention.

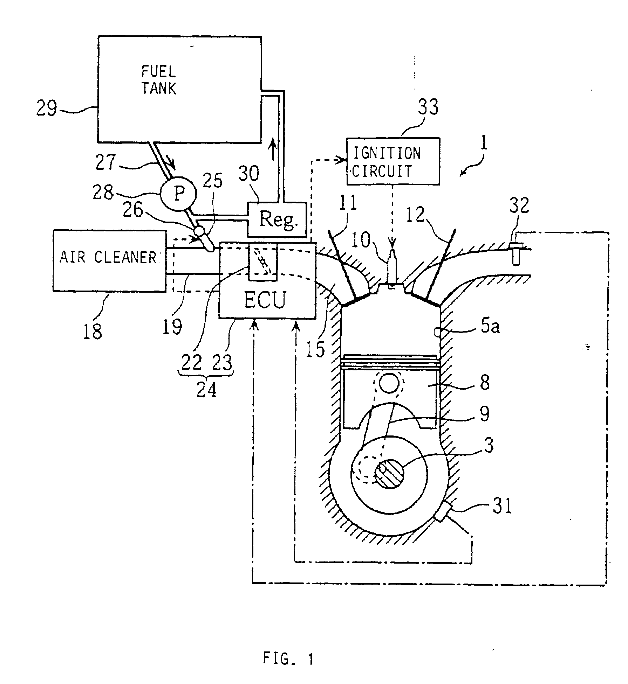

Figures 1 through 12 show an embodiment (a first embodiment) which does not conform with all of the features of independent claim 1 but explains general features in view of the subject-matter of the present invention.

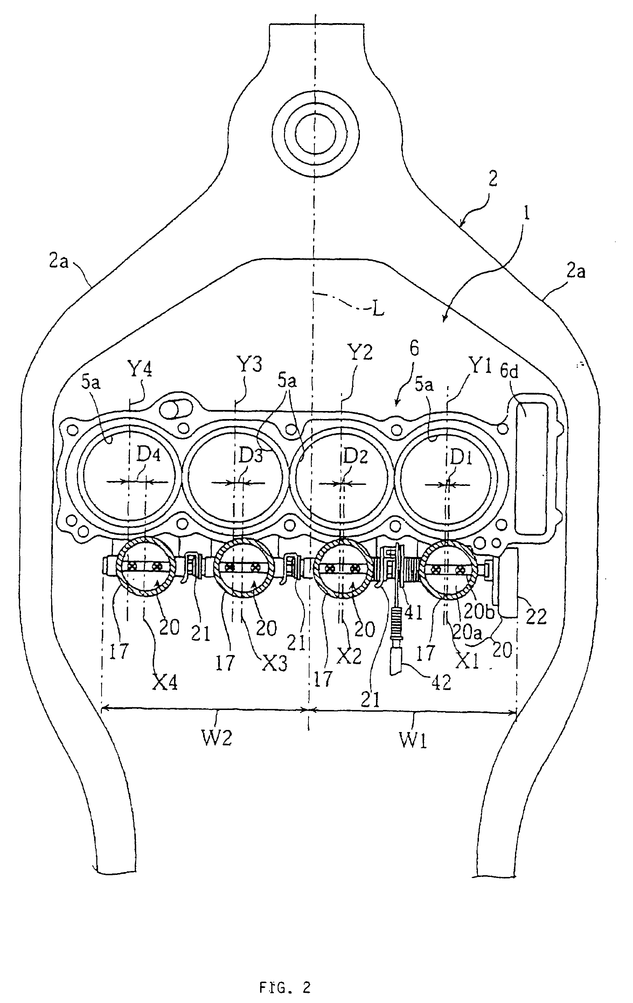

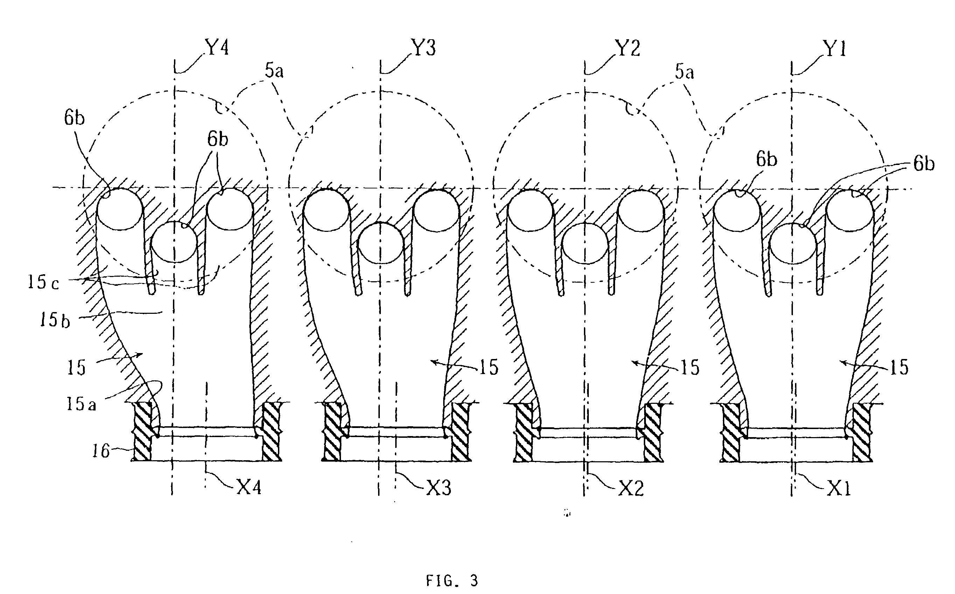

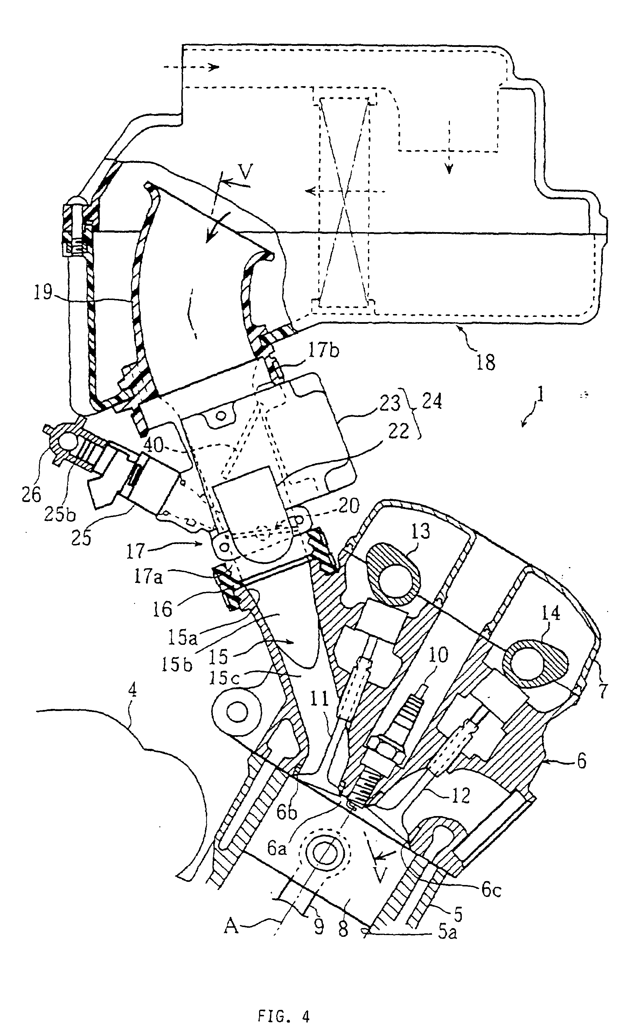

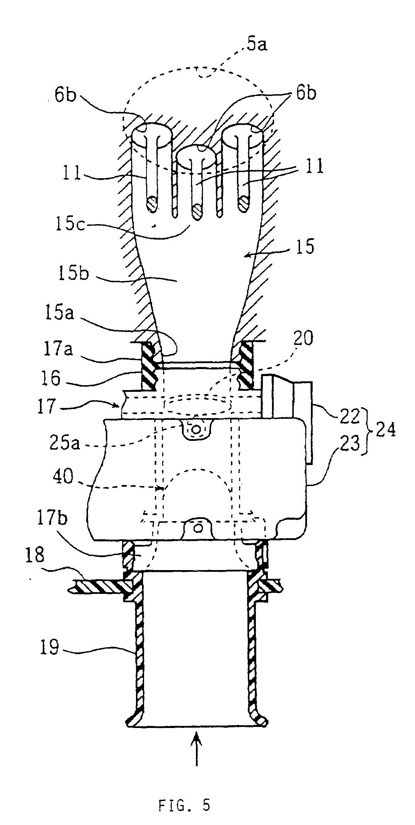

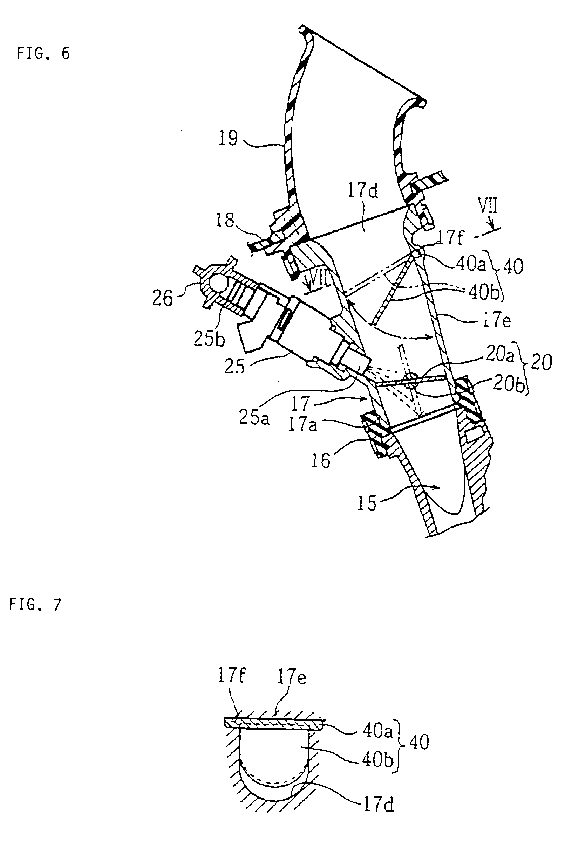

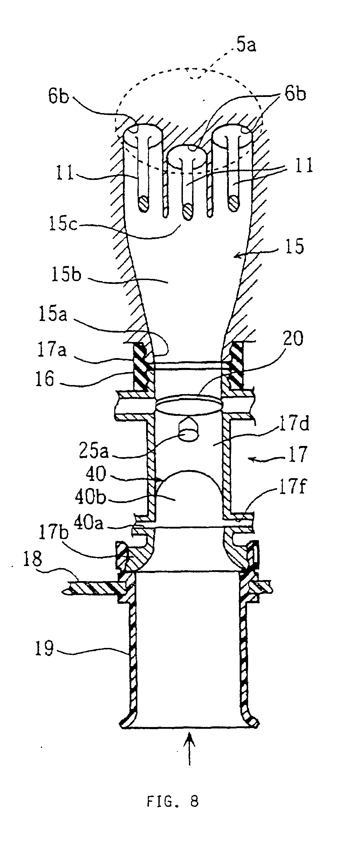

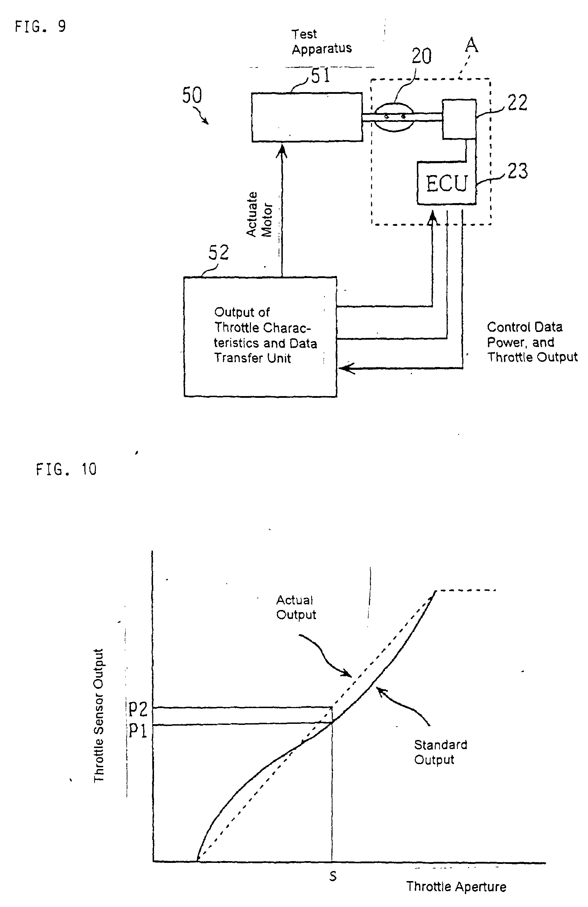

Figure I is an overall structural view of the engine; Figure 2 is a top view diagram of the cylinder block and throttle body areas of the engine when mounted in a vehicle: Figure 3 is a sectional top view showing the shape of the engine's air intake ports: Figure 4 is a sectional right side view of the engine; Figure 5 is a sectional top view (along line V-V of Figure 4) of the air intake system; Figure 6 is a sectional right side view of the throttle body area; Figure 7 is a sectional view along line VII-VII of Figure 6; Figure 8 is a sectional top view of the air intake system; and Figures 9 through 12 are Figures to explain the correction process performed by the ECU on the basis of the throttle sensor output. In the embodiment, references to front and back, left and right shall be from the perspective of a driver seated on the vehicle.

In the Figures, 1 is a water cooled, four cycle, in-line four cylinder, five valve engine for motorcycles. The engine 1 is mounted in the frame 2 of the motorcycle in a manner such that its crankshaft 3 is disposed transversely, and its cylindrical axis A (see Figure 4) tilts forward from the perpendicular. Said engine 1 has an internal gear apparatus that is integrated a: the front of the cylinder body 5. A cylinder head 6 and a head cover 7 are attached to the top of the cylinder body. Pistons 8 have been slidably inserted into the cylinder bores 5a of the cylinder body 5, and said pistons 8 are connected to the crankshaft 3 by means of connecting rods 9.

Further, four concave combustion areas 6a are formed in the surface of the foregoing cylinder head 6 that mates with the cylinder body 5, and electrodes from spark plugs 10 border the inside surface of these concave combustion areas 6a at their center.

There are also three air intake valve openings 6b and two exhaust valve openings 6c located along the circumference of each of the foregoing concave combustion areas 6a. Air intake valves 11 and exhaust valves 12 are installed in the air intake valve openings 6b and exhaust valve openings 6b, respectively, and are biased toward the normally closed position. An air intake carnshaft 13 opens and closes the air intake valves 11, as does an exhaust camshaft 14 for the exhaust valves 12.

The dynamic valve mechanism of the present engine 1 embodiment is of the side chain type (see Figure 2), wherein the foregoing air intake camshaft 13 and exhaust camshaft 14 protrude from the right side wall of the engine 1 and these are rotationally driven by the foregoing crankshaft 3 by means of a timing chain inside a chain chamber 6d that extends in the cylindrical axis direction from the engine.

The air intake system for the foregoing engine 1 is equipped with air intake ports 15 that pass through the rear wall of the cylinder head 6 to the air intake valve openings 6b for each of the cylinders, with a throttle body 17 which is connected by a joint 16 to each external connection port 15a of said air intake port 15, and an air intake duct 19 which connects the throttle body 17 to the inside of the air cleaner box 18. The overall shape of each air intake passage constituted by the foregoing air intake port 15, throttle body 17, and air intake duct 19 is approximately linear, and is aligned in the approximate plumb direction. So doing minimizes the air intake resistance to the smallest level possible. The angle of the air intake passage to its cylinder's axis A may be set appropriately in a range from 30 to 60 degrees.

The foregoing air cleaner 18 is mounted between the left and right tank manifolds 2a, 2a of the vehicle frame 2. Though it is not shown in the Figures, the fuel tank is mounted rearward of the foregoing air cleaner box 18, and both the fuel tank and the foregoing air cleaner box 18 are covered by the tank cover.

The above mentioned air intake ports 15 are composed of a single main area 15b at the foregoing external connection opening 15a and three branch ports 15c, which branch into the foregoing air intake valve openings 6b. The external connection opening 15a protrudes slightlv in a cylindrical shape from the rear wall of the cylinder head 6, and the foregoing ring shaped rubber joint 16 connects it with the downstream connection boss area 17a of the foregoing throttle body 17. This structure allows the supporting of the throttle body 17 on the cylinder head 6. The four throttle bodies 17, one per each cylinder, are unitized by means of an ECU case 23 that will be described below.

The foregoing throttle bodies 17 are structured to contain the throttle valve 20, the below described damping valve 40, and in addition, to support the fuel injection valve 25. The foregoing throttle valve 20 is situated toward the downstream connection boss area 17a of each of the respective throttle bodies; it consists of a circular valve plate 20a that is bolted onto a valve shaft 20b. The various valve shafts 20b for the foregoing throttle valves 20 for each cylinder protrude to the outside of the throttle bodies where they connect to a linkage mechanism 21. The linkage mechanism 21 is of a type that can be adjusted to accurately adjust the idling aperture for each of the throttle valves.

As is shown in Figure 2, the throttle bodies 17 for each of the foregoing cylinders are arrayed in a manner such that when the below described throttle sensor 22 is attached, the distance W1, from the center line of the vehicle L to the right end of the throttle sensor, is the same as the distance W2 from the left end of the throttle body 17 to the center line L of the vehicle.

Then, the lines X1, X2 that are parallel to the vehicle center line L and pass through the centers of the air intake passages of the first and second intake throttle bodies 17, 17 from the right, are offset slightly by D1, D2 (specifically about 2 mm) toward the chain chamber side from the lines Y1, Y2, that are parallel to the foregoing vehicle center line L and pass through the cylindrical axes of the first and second cylinders from the right. On the other hand, the lines X3, X4 that are parallel to the foregoing vehicle center line and that pass through the rightward third and fourth throttle body air intake passage axes, are offset by D3, D4 (specifically about 7 mm, 14 mm) toward the chain chamber from the lines Y3, Y4, that are parallel to the foregoing vehicle center line L and pass through the cylindrical axes of the third and fourth cylinders from the right. To wit, the farther to the left of the cylinder body, the more to the right the throttle body air intake passage axes have been offset from the cylindrical axis. This feature precludes a large left side projection of the left end throttle bodies from the left wall of the cylinder block 6, which would require a wider vehicle frame.

There is a control unit 24 composed of an ECU case 23 that contains a throttle sensor 22, which detects the aperture of the throttle valve 20, and an engine operating control unit ECU, which is removably attached the throttle body 17 on the right end.

The throttle sensor 22 of the foregoing control unit 24 is connected with a projecting structure on the outside of the throttle shaft 20b of the throttle valve 20 on its right end; it detects the angle of rotation (throttle aperture) of said throttle shaft 20b. This throttle sensor 22 is positioned on the chain chamber 6d side of the foregoing cylinder head 6, that is, in the dead space on the back side of the right protruding area of the chain chamber.

The link mechanism 21 between the foregoing first throttle body 17 and second throttle body 17 is attached to a throttle pulley 41 which is connected by a throttle cable 42 to the throttle grip (not shown) on the handlebars. The throttle valves are thereby synchronously opened and closed with the rotational manipulation of the throttle grip.

The foregoing fuel injection valves are respectively mounted in the bottom wall of the foregoing throttle bodies 17, upstream of and in close proximity to the foregoing throttle valves 20. The attachment is such that the injection nozzles 25a are on the upstream side of the throttle valve and the downstream side of the damping valve. The fuel spray from the injection nozzle 25a of the fuel injection valve 25 strikes the upstream-side surface (top surface) of the throttle valve 20 in the area near the bottom wall when the throttle valve is fully closed (minimum aperture). When fully open (maximum aperture), the fuel spray strikes the bottom surface of the throttle valve 20, primarily on its downstream side. Thus, the collision area for the fuel spray can be appropriately directed as described above by the positioning of the foregoing injection nozzle 25a and by the shape of the nozzle.

Further, the fuel transit holes 25b of the foregoing fuel injection valves 25 are connected to a single fuel supply manifold 26. The fuel supply manifold 26 is cylindrical and long enough to span the fuel injection valves for all of the cylinders. Said fuel supply manifold is connected by a fuel supply pipe 27 to a fuel pump 28 and a fuel tank 29.

Here, reference number 30 indicates a fuel pressure regulator valve that is connected on the outlet side of the fuel pump 28 of the foregoing fuel supply pipe 27; it regulates the pressure of the fuel being supplied to the fuel injection valves 25. This fuel pressure regulator valve 30 is of the variable fuel pressure type, regulating the pressure of the fuel supplied by the fuel pump 28 based on a control pressure. The negative intake pressure from the confluence of taps taken downstream of the throttle valves was used as the foregoing control pressure.

When the throttle valve 20 is at its idling aperture (minimum aperture), because the foregoing control pressure (negative intake pressure) is much lower than atmospheric pressure, the foregoing fuel pressure regulator valve 30 regulates the pressure in the fuel supply manifold 26 to a correspondingly low pressure. This minimizes the difference in pressure between the fuel pressure inside the fuel supply manifold 26 and the pressure at the fuel injection position (the approximate atmospheric pressure on the upstream side of the throttle valve), which results in a smaller amount of fuel being injected. As a result, there is an essentially broadened dynamic range, which is the ratio of the minimum amount of fuel injection to the maximum amount of fuel injection by the fuel injection valve.

The purpose of the abovementioned damping valves 40 is to dampen any rapid changes in the volume of air intake that result from the rapid opening of the throttle valve 20. Flapper valves have been used for this purpose. To wit, the damping valves are composed of a valve plate member 40b which is attached at its upper edge to a shaft member 40a. Said shaft member 40a is supported free to swing by means of a support hole 17f that is formed in the camshaft direction of the ceiling area 17e of the throttle bodies. A biasing spring (not shown) or its own resiliency is relied on to allow it to maintain it normally closed as shown by the two-dot dotted line in Figure 6.

The shape of the foregoing valve plate member 40b resembles an oval that has been cut in half perpendicularly to its long axis. As is shown in Figure 7, the position of the damping valve 40 in the air intake passage 17d of the throttle body is such that the valve plate member 40b has a shape that conforms to ½ of an oval, allowing it to swing freely in the air intake passage 17d without interference from the inside surfaces. Further, the speeding up of the air flow in the area near air intake openings 6b in the rear wall of the cylinder, where the flows are introduced together into the cylinder bore 5a, causes the generation of a vertical swirl (tumble) that flows along the inside of the cylinder bore in the cylinder axial directions.

The foregoing ECU 23 receives inputs of a throttle aperture signal from the foregoing throttle sensor 22, an engine RPM signal from an engine RPM sensor, and an air/fuel ratio signal from an O₂ sensor located in the exhaust system, which allow it, based on the operating state of the engine, to feed an ignition timing control signal to the ignition circuit 39, and fuel injection volume and timing control signals to the fuel injection valves.

The engine 1 in the present embodiment has an above described volume ratio (port volume/displacement per cylinder) of 0.15 to 0.45, which is considerably smaller than in conventional engines. Since the throttle valves 20 are placed in close proximity to the air intake valve openings 6b, the flow of the intake air very sensitively reflects the aperture of the throttle valve.

On the other hand, the engine in the present embodiment places the fuel injection valves 25 upstream of the throttle valves, which, compared to the conventional case where the fuel is sprayed on the bottom surface of the valve's umbrella structures, creates concern over delayed fuel response.

As a result, when the throttle valves 20 are rapidly opened under a no load condition to perform no load engine racing (air blow out), the amount of intake air, responding very sensitively to the aperture of the throttle valves 20, rapidly increases. This feature results in a greater delay in increasing the amount of fuel injection than would be the case during rapid acceleration, and can cause the further problem of the strong flow of intake air in the air intake passages causing the fuel adhering to the passage walls being drawn into the combustion chambers and to result in loss of fire during the initial period of throttle manipulation in the foregoing no load racing, and in diminished operational feel of the engine.

The engine 1 of the present embodiment addresses this issue using the above described damping valves 40. When the throttle valves 20 are opened rapidly as described above, the high negative pressure on the downstream side causes the normally closed damping valves 40 to open. The air intake resistance imposed by these damping valves 40 buffers the increased speed and volume of the air intake, damping the delay in the fuel response during no load engine racing, inhibiting loss of fire, and preventing the loss of operational feel of the engine.

On the other hand, since the fuel injection valves 25 are placed on the upstream side of the throttle valves, when the throttle valves are at their minimum aperture, the fuel spray strikes the bottom wall area of the throttle valves, promoting its atomization and contributing to good combustion, improved fuel economy, and good exhaust gas cleansing.

Further, it is possible, in order to even better improve the operationa! feel of the engine during no load racing, to detect an extreme operating condition by sensing whether the neutral switch is ON during the rapid opening of the throttle valve. It is then possible to discriminate between extreme operating states under load and such states under no load (no load engine racing), and then make a correction to the amount of fuel injection so that the amount differs from the extreme operating state under load.

Specifically, the increase correction for the fuel injection under no load should be more than that correction under rapid acceleration, and the timing of issuing this fuel increase signal should be advanced. In this case, determinations can also be made from the engine temperature of whether or not the engine is warmed up, and when not yet fully warmed up, a fuel temperature-based correction can be added. The temperature can also be used as a means for predicting the amount of fuel adhering to the walls of the air intake passage and the amount that is vaporized. An additional correction can also be made based upon said amount of fuel adherence for even more effective control.

In addition, this embodiment utilizes a control unit 24 which is composed of a unitized throttle sensor 22 and ECU case 23. Said control unit 24 can then be attached to one throttle body 17 to form one assembly, which offers the following operational effects.

The unitization of the throttle sensor 22 and the ECU case 23 eliminates the need for wiring between the ECU and sensor. Further, since the control unit is assembled with the throttle body 17 prior to its attachment to the engine, engine assembly is simplified compared with the labor involved in attaching throttle body 17, throttle sensor and ECU case individually.

Since the throttle sensor 22, the ECU case 23 and a throttle valve 20 are thereby assembled beforehand, it is possible to test the output properties of the individual throttle sensors in advance, and that information can then be stored in the memory of the ECU to enable highly precise control. Thus, an inexpensive throttle sensor can be used to achieve high accuracy control without having to resort to high cost specifications for the output characteristics of high accuracy throttle sensors.

Further, in the prior art, it was necessary to make fine adjustments to the throttle sensors so that their output values would be constant at a specific aperture when fully closed or opened. However, it is possible to eliminate the need for such fine adjustment operations in this invention.

The procedures for storing the output characteristics mentioned above in the memory of the ECU will now be described in further detail.

In Figure 9, 50 is a test device which detects the output characteristics of the throttle sensor 22. It tests article A which is composed of a throttle valve 20, throttle sensor 22, ECU case 23 that have been unitized in a control unit 24 with the throttle body sensor. A high accuracy motor 51 is used to drive the throttle valve 22, and then the relationship between the aperture of said throttle valve 22 and the output values from the throttle sensor can be accurately measured.

As is shown in Figure 10, it is generally the case that these actually detected characteristics, which are shown by the solid line, differ from the standard output characteristics, which are shown by the broken line. Thus, in cases where the actual output values differ from the standard values, a data transfer unit 52 on the test device 50 can determine a correction coefficient which causes the actual output *p1* from the throttle sensor 22 to be adjusted to match the standard output *p2* at a specific aperture *S*. In this manner, a correction map can be prepared inside the test device 50, and then this map can be stored in the non-volatile memory of the ECU.

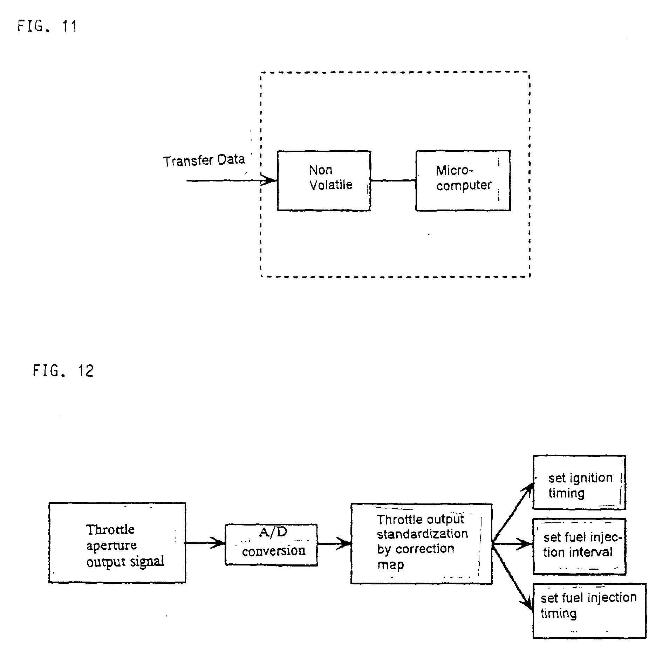

As is shown in Figure 12, the ECU, after A/D converting the actual throttle output signal from the throttle sensor, performs the required correction based upon the corresponding standard signal in the foregoing correction map, and this corrected throttle aperture is used as the basis for control of the ignition timing, fuel injection length, fuel injection timing, etc. This effect results in high linear accuracy for the throttle sensor that eliminates variation among different units.

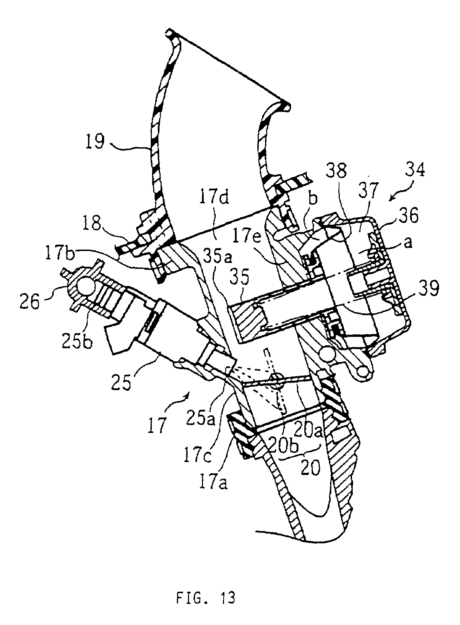

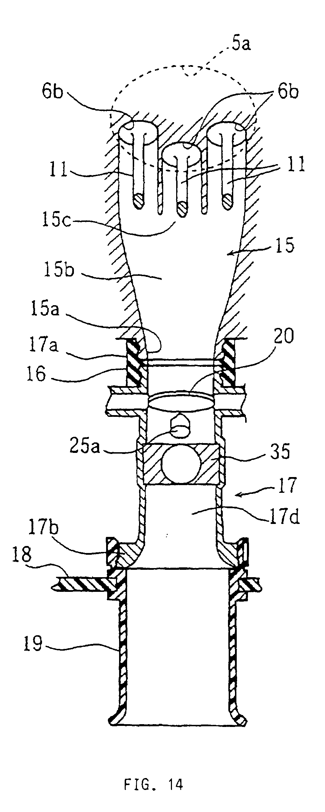

Figures 13 and 14 show a second embodiment which does not conform with all of the features of independent claim 1 but explains further features in view of the subject matter of the present invention.

These figures will be used to explain the damping valves. In the Figures, parts corresponding to those in Figures 1 through 12 bear the same reference numbers.

In this embodiment, the damping valves 34 are of the auto-variable venturi type. Each damping valve 34 consists of a free piston 35 that is slidably inserted into the ceiling wall 17e of the valve body 17c of the throttle body 17 in a manner such that it can protrude in the perpendicular direction inside the venturi passage 17d to vary the cross section of the passage. The top end of said piston 35 is positioned inside a working chamber 37 which is formed by the ceiling 17e of the valve body 17 and the cover 36. Said working chamber 37 is divided into a negative pressure chamber *a* and an atmospheric pressure chamber *b* by means of a diaphragm 38 which is connected to an airtight seal to the top of the free piston 35. The structure is such that the pressure between the bottom wall of the foregoing venturi passage 17d and the bottom surface of the free piston is introduced into the foregoing negative pressure chamber *a*. In the Figure, 35a is a groove running in the air intake passage direction and is formed in the bottom surface of the free piston 35. It forms the air intake passageway when the free piston 35 is fully closed. Also, 39 is a spring that normally holds the piston 35 in its minimum aperture position.

In this second embodiment of engine 1, when the foregoing throttle valves 20 are rapidly opened, the speed of the air passing by the bottom of the foregoing piston rises with the increased air intake flow volume. The negative pressure in this area causes the piston 35 to rise from its biased closed position as the diaphragm 38 draws the piston 35 upward. This effect thusly dampens the speed increase of the rising intake air volume when the throttle is rapidly opened, resulting in damping the delay in the fuel response, even under the foregoing no load racing conditions, and the loss of fire and diminishing operational feel.

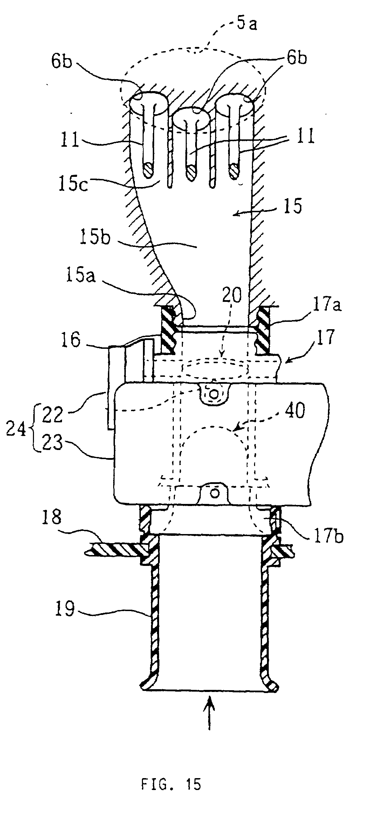

In this embodiment, the throttle sensor 22 and ECU case unitized with the control unit 22 are mounted on the first throttle body 17 from the right side (on the right end), but it would also be possible to mount this control unit to the fourth throttle body (left end) 17 as is shown in Figure 15. In Figure 15, the throttle body 17 has been offset a great deal to the right from the axis of the fourth cylinder, making it possible to place the throttle sensor 22 on the back surface of the cylinder bore 5a of said fourth cylinder. This structures makes it possible to avoid widening the engine, and by extension, widening the vehicle.

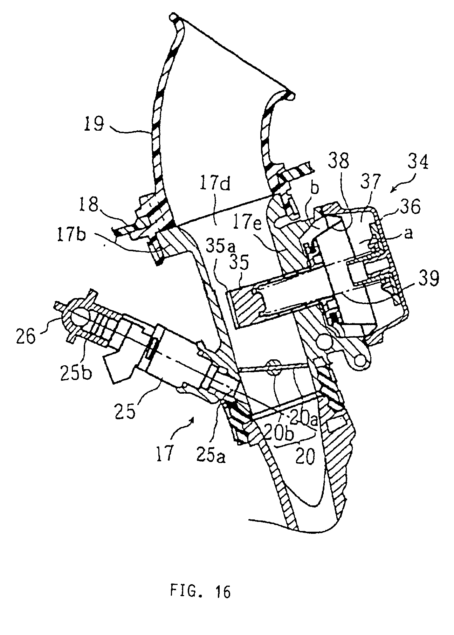

Figure 16 shows another embodiment (third embodiment) which conforms with the present invention and shows all of the features of independent claim 1. In this Figure, parts similar to those of Figures 1 through 15 bear the same reference numbers.

In this embodiment, the foregoing fuel injection valves 25 are placed so that their injection nozzles 25a lie downstream of the throttle valves 20 in the air intake passages. When the throttle valves are at maximum aperture, at least a part of the fuel spray strikes the downstream area of the valve plate 20b of the fully opened throttle valve.

Thus, in this seventh embodiment as well, during no load engine racing, the atomization of the fuel is promoted by its striking of the downstream area of the valve plate 20b when in its fully open position.

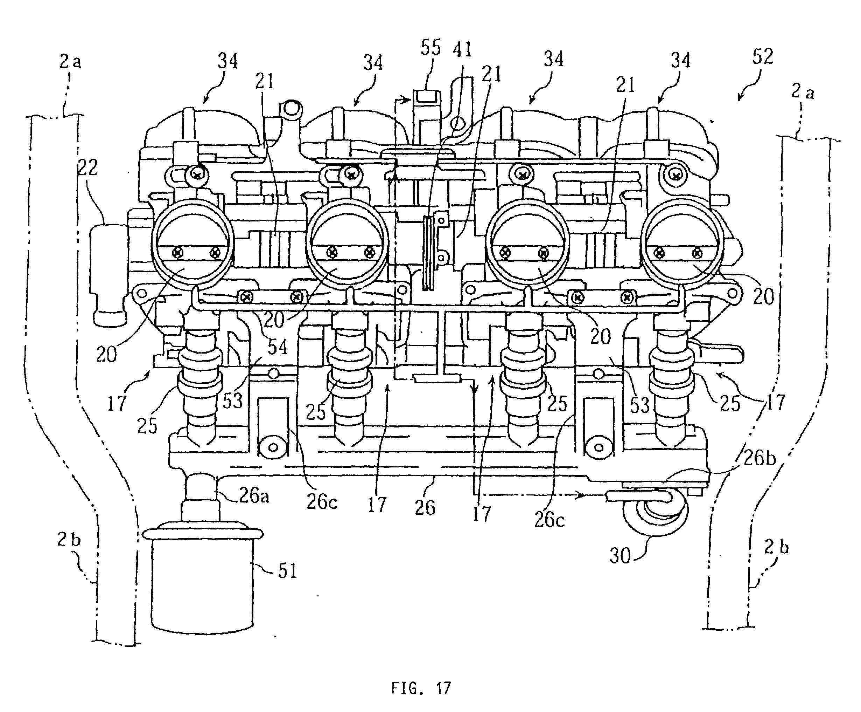

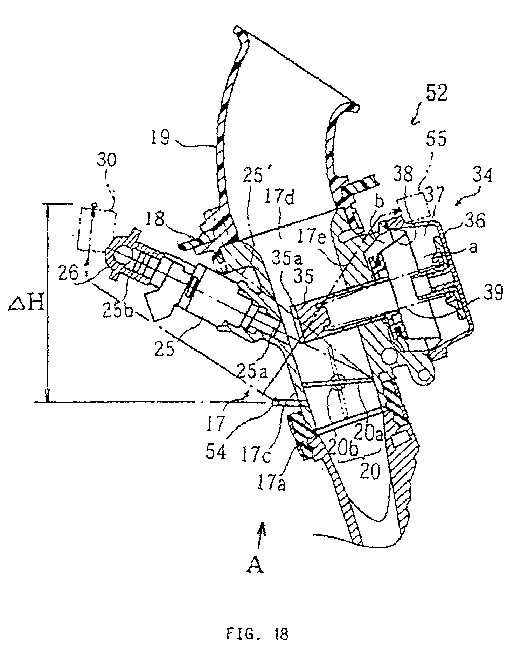

Figures 17 and 18 show another embodiment (a fourth embodiment) which does not conform with all of the features of independent claim 1 but explains further features in view of the subject-matter of the present invention.

These Figures show the bottom surface and side surface of an air intake unit when viewed from the engine. In the figures, parts similar to those in Figures 1-16 bear the same reference numbers.

In this embodiment, the four sets of throttle bodies 17 have been unitized, and the throttle body 17 in Figure 18 corresponds to one this assembly of four. In the air intake unit 52 of this embodiment, the throttle valves 20, as well as the fuel injection valves 25 are contained in the assembly of four throttle bodies 17, and each of the throttle valves 25 is connected to a common fuel supply manifold 26. Thus, the common fuel supply manifold connection unitizes the foregoing four throttle bodies. The fuel supply opening 26a of this fuel supply manifold 26 is connected to a fuel filter 51 and to a fuel pressure regulator valve 30 which is attached at the fuel return opening 26b.

Here, the foregoing fuel filter 51 and the fuel pressure regulating valve 30 are aligned in the fore-aft direction and do not extend in the transverse direction past the length of the fuel manifold. This structure makes it possible to position the air intake unit 52 in the narrow space between the knee grip 2b, 2b areas formed by the bend in the left-right pair of tank manifolds 2a, 2a.

There are integral bosses 26c formed on the left and right sides of the foregoing fuel supply manifold 26 between the fuel injection valves 25, 25. These bosses are bolted at one end to the stays 53 and the other ends of the stays 53 are affixed to the two throttle bodies 17, 17.

Further, there are feed pipes 54 that feed the pressure from downstream of the throttle valves 20 in the throttle bodies, and said feed pipes 54, divide into two branches, one connecting with the foregoing fuel pressure regulator valve 30 and the other connected with the air intake negative pressure detection sensor 55.

Thus, in this fourth embodiment, the independent throttle bodies 17 for each cylinder in the four-cycle engine have been unitized by their connection with the fuel supply manifold, and the fuel filter 51 and the fuel pressure regulator valve 30 have been attached to said fuel supply manifold 26 to make the air intake apparatus more compact overall and practical on motorcycles, where finding the space to place such apparatus is difficult.

Further, a feed pipe 54 is connected to the downstream side of the throttle bodies which provides that negative intake pressure to the fuel pressure regulator valve 30. For the reasons that were explained for the first embodiment, this structure can be used essentially to expand the dynamic range of the fuel injection valves 25. In particular, it increases the reliability of fuel injection in the idling range where only small amounts are required, and results in more stable idling.

Here, since the feed pipe is connected at the bottom wall area on the downstream side of the throttle bodies, there would be the possibility of fuel being introduced into said feed pipe 54, but in the present embodiment, the air intake negative pressure sensor 55 and the fuel pressure regulator valve, as shown in 22, are placed high, with a specific head difference ΔH (in this embodiment, it is about 150 mm), so that there can be no fuel invasion of said pressure detection sensor 55 or fuel pressure regulator valve 30.

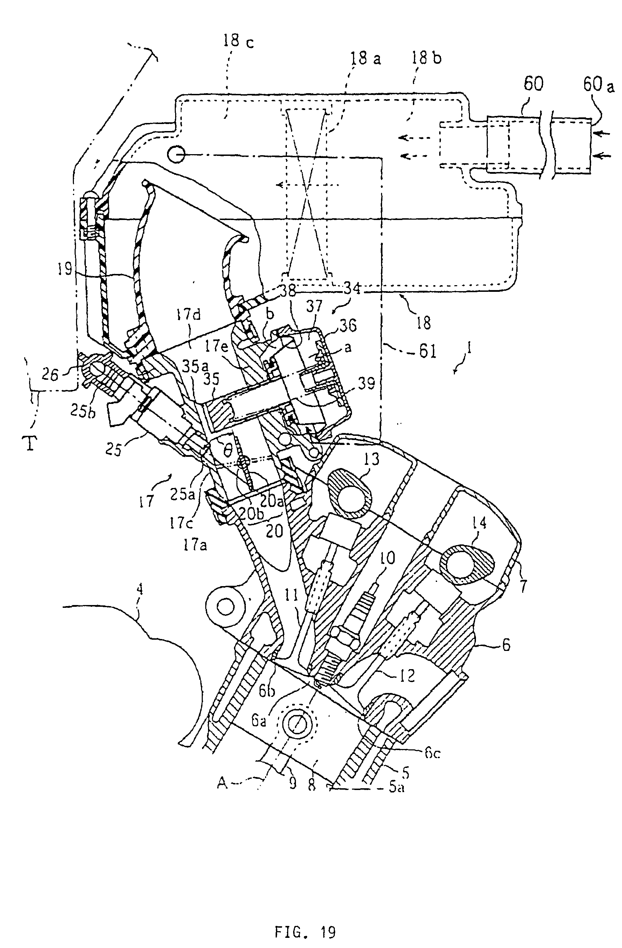

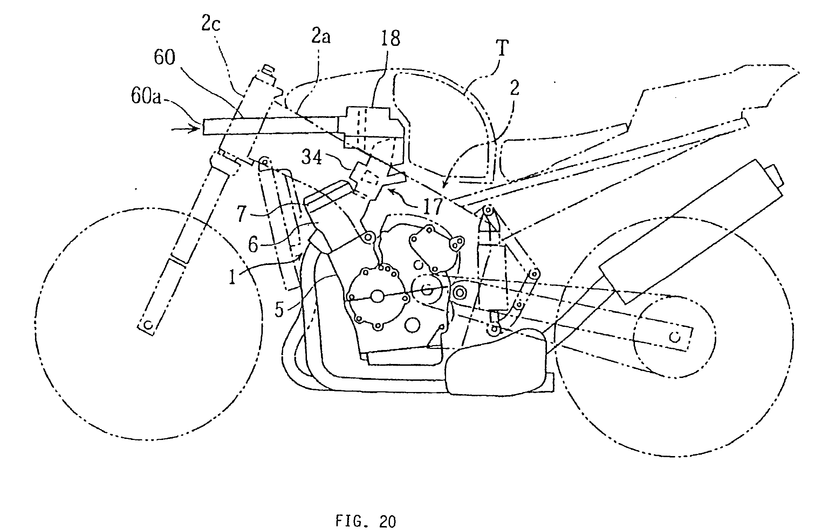

Figures 19, 20 show sectional side views of the air intake apparatus of another embodiment (fifth embodiment) which does not conform with all of the features of independent claim 1 but explains further features in view of the subject-matter of the present invention, as mounted on the left side of a motorcycle. In the Figures, parts that are similar to those in Figures 1 through 18 bear the same reference numbers.

In this embodiment, there is a connection on the upstream side of the element 18a of the air cleaner 18 of a primary chamber 18b and a ram air introduction duct 60 where the pressure from the running air (ram air) is introduced. Said duct 60 is made of plastic and has a circular cross-section that extends forward as a cylinder. Its opening on the upstream side 60a is tapered slightly to a smaller diameter. The foregoing opening on the upstream side 60 is positioned in close proximity to the head pipe 2c of the vehicle frame 2, and faces forward from the vehicle.

There is a secondary chamber 18c which is downstream of the element 18a of the foregoing air cleaner 18 to which one end of a ram air introduction hose 61 is connected. The other end of said hose is connected to the atmospheric pressure chamber (positive pressure chamber) *b* of the working chamber 37 of the foregoing damping valves 34.

In this fifth embodiment, when the vehicle is stopped and no-load racing taking place, or when it is running and the throttle is opened quickly, the damping valves 34 operate in a manner similar to that described in the preceding embodiments. The increased air intake volume is accompanied by faster air flows moving past the bottom end of the foregoing piston 35, and the negative pressure in that area causes the closed-biased piston 5 to rise as the diaphragm 38 draws the piston 35 upward. This feature dampens the speed increase of the air intake flow when the throttle valves are opened quickly. Even during the above mentioned no load racing, the delay in the fuel response is dampened, thereby preventing loss of fire and diminished operational feel of the engine.

On the other hand, since there is a ram pressure introduction duct 60 in this embodiment, the ram air pressure serves to increase the pressure inside the air intake passages by an amount which corresponds to the speed of the vehicle. In the present embodiment, the aperture of the free piston 35 is determined by the pressure difference generated at the base of the free piston 35 between the air intake pressure *Po* and the pressure *P1* inside the atmospheric pressure chamber *b* ( =*P1*-*Po)*. To wit, the larger the Δ*P*, the larger the aperture of the free piston 35. Thus, when the vehicle is running at high speeds, the air pressure inside the air intake passages is increased by an amount corresponding to the ram pressure *Po*', decreasing the negative pressure *Po* at the foregoing free piston 35, and as a result, decreasing the foregoing differential Δ*P*. This feature might create concern over inadequate free piston 35 aperture.

However, in the present embodiment, the foregoing ram air pressure *Po*' is also conducted to the atmospheric pressure chamber *b*, so that the foregoing pressure differential *ΔP = Po*' *- Po,* thereby canceling the amount by which the foregoing negative pressure *Po* is reduced and preventing the foregoing pressure differential Δ*P* from becoming smaller. This feature resolves any issue over inadequate free piston aperture when the vehicle is traveling at high speeds, while securing the air volume required for high speed operations and improving the response of the intake air volume to the opening and closing manipulations of the throttle valves 20.

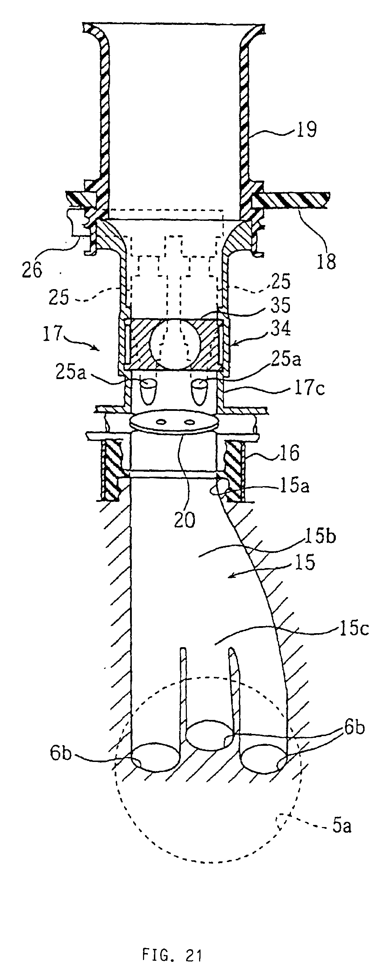

Figure 21 shows another embodiment (sixth embodiment), which does not conform with all of the features of independent claim 1 but explains further features in view of the subject-matter of the present invention, it is a sectional top view of an air intake passage area. In the Figure, parts similar to those shown in Figures 1-20 bear the same reference numbers.

In this embodiment, two fuel injection valves 25, 25 are positioned in each of the foregoing throttle bodies 17c in a manner such that their nozzles lie between the throttle valve 20 and the foregoing damping valve, and such that they are aligned in parallel with the axial line of the air intake passage. These fuel injection valves 25, 25 are connected to a single fuel supply manifold in the present embodiment.

Further in this embodiment, during engine idling or low speed operations when but little fuel is required, only one of the two fuel injection valves is operated, but in mid- to high-RPM ranges where there are high fuel requirements, both fuel injection valves are operated. Further, the amount of fuel injected from one of the fuel injection valves is set to be less than the amount injected from the other fuel injection valve to broaden the range of fuel injection from very small amounts to large amounts, thereby essentially broadening the dynamic range.

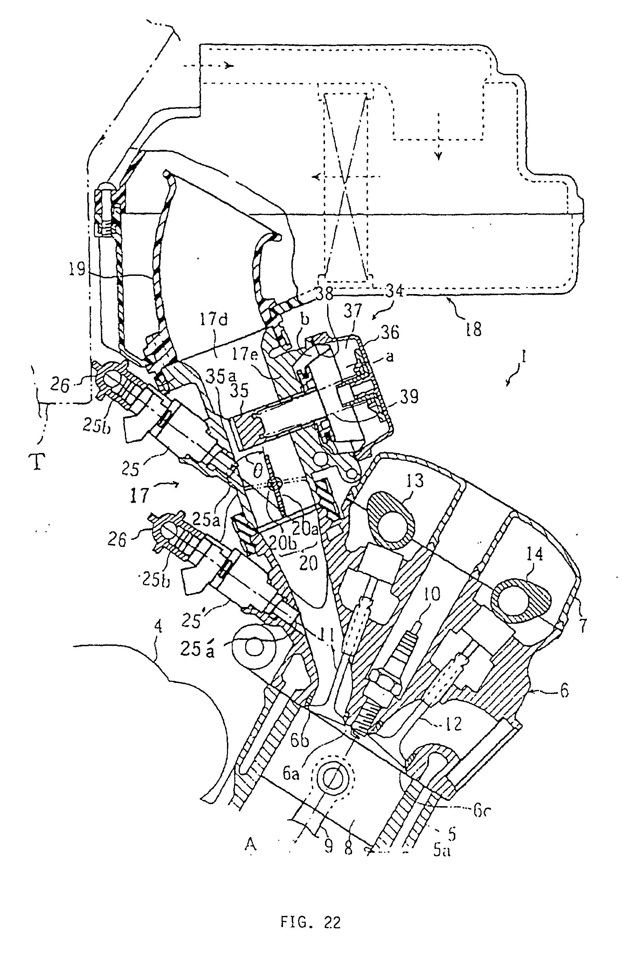

Figure 22 shows another embodiment (seventh embodiment), which does not conform with all of the features of independent claim 1 but explains further features in view of the subject-matter of the present invention, in a sectional side view of the air intake passage area. In the figures, parts similar to those shown in Figures 1-21 bear the same reference numbers.

In this embodiment, the injection nozzle 25a of a first fuel injection valve 25 is positioned between the throttle valve 20 and the foregoing damping valve 34, while the injection nozzle 25a' of a second fuel injection valve 25' is positioned on the downstream side of the foregoing throttle valve 20, specifically so that the fuel is injected into the area where the air intake valves 11 have been inserted into the air intake port 15.

In the present embodiment, during engine idling or low RPM operational states, when but a small amount of fuel is required, only the first fuel injection valve 25 is operated; during mid- to high RPM operational ranges, when a large quantity of fuel is required, both fuel injection valves 25, 25' are operated. Further, the amount of fuel injected from the first fuel injection valve 25 is set to be smaller than that injected from the second fuel injection valve 25'. This design makes control possible over a broad range of fuel injection, from very small to large amounts, thereby essentially broadening the dynamic range.

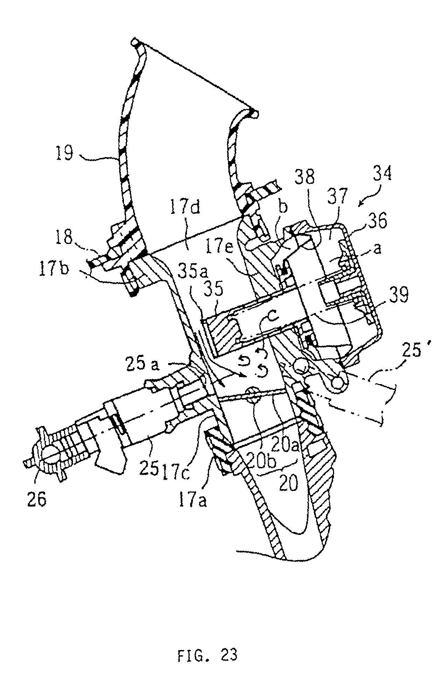

Figure 23 shows another embodiment (eighth), which does not conform with all of the features of independent claim 1 but explains further features in view of the subject-matter of the present invention, in a sectional side view of the air intake passage area. In the Figure, parts similar to those shown in Figures 1 through 22 bear the same reference numbers.

In the present embodiment, the fuel injection valve 25 is positioned in a manner such that it directs its fuel spray toward the Karman vortex c that forms on the downstream side of the damping valve 34. Specifically, the injection nozzle 25a of the fuel injection valve 25 is positioned between the free piston 35 of the damping valve 34 and the throttle valve 20 and is directed slightly toward the upstream side.

During operating ranges where the free piston 35 has a small aperture, as is shown in the Figure, a swirl develops in the top area downstream of the free piston to create a Karman vortex *c*. But in this embodiment, the atomization of the injected fuel is promoted and combustion properties improved by utilizing the Karman vortex *c*, since the fuel is injected toward said Karman vortex c.

In the present embodiment, the fuel injection valve has been placed in the bottom wall of the air intake passage, but as shown by the double-dot line in the same Figure, a fuel injection valve 25' could of course be positioned on the damping valve side, and have its fuel spray cirected toward the Karman vortex c.

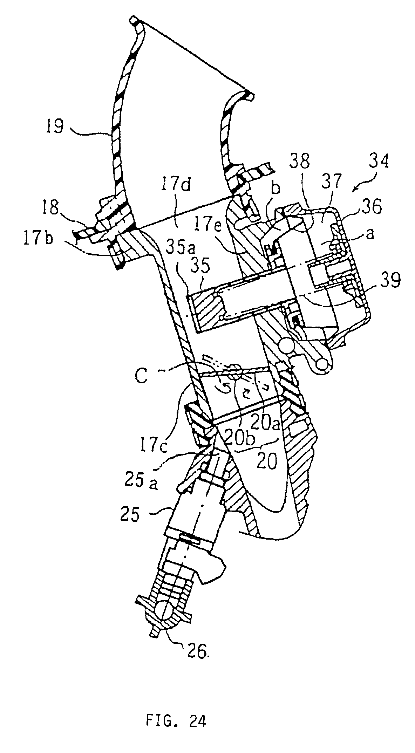

Figure 24 is a sectional side view of the air intake passage area shown in another embodiment (ninth embodiment) which conforms with all of the features of independent claim 1 of the present invention. In the Figures, parts similar to those shown in Figures 1 through 23 bear the same reference numbers.

In this embodiment, the foregoing fuel injection valve is placed to direct the fuel injection toward the Karman vortex *c* that develops on the downstream side of the foregoing throttle valve 20. Specifically, the fuel injection valve 25 is placed in the bottom wall side of the air intake port 15 in the cylinder head 6, moreover, the injection nozzle 25a is directed toward the Karman vortex c that develops downstream of the throttle valve 20.

When the operating range is such that aperture of the throttle valve 20 is small, as shown in the Figure, a Karman vortex *c* is generated on the downstream side of the throttle valve 20. In this embodiment, the fuel spray is directed toward said Karman vortex *c*, wherein the Karman vortex *c* promotes its atomization and improved combustion.

In the present embodiment, the fuel injection valve was placed in the bottom wall side of the air intake port, but it would of course be possible to locate the fuel injection valve on the ceiling side near the damping valve 34 in the air intake port and to direct the fuel spray toward the foregoing Karman vortex *c*.

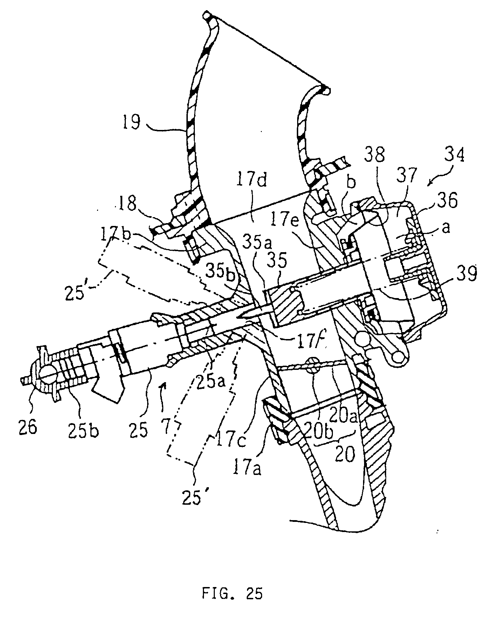

Figure 25 is a sectional side view of the air intake area of another embodiment (tenth embodiment) which does not conform with all of the features of independent claim 1 but explains further features in view of the subject-matter of the present invention. Parts that are similar to those in Figures 1 through 24 bear the same reference numbers.

In this embodiment, the foregoing damping valve 34 is equipped with a free piston that can recede inside and protrude from the air intake passage in a direction perpendicular to its axis, and a jet needle 35b, which extends in the foregoing direction of protrusion. This jet needle 35b is inserted into the fuel supply hole 17f that is formed in the wall on the opposite side from the free piston (bottom wall) of the air intake passage. The fuel injection valve 25 has its fuel injection nozzle 25a positioned so that the fuel spray is directed from the fuel supply hole 17f toward the base surface of the foregoing free piston 35.

In the present embodiment, the fuel is directed toward the high speed air that flows between the bottom wall of the air intake passage and the free piston 35, and further, it strikes the bottom surface of the free piston 35 to assure the mixing of the injected fuel with the air as a means to promote fuel atomization. Also, fuel atomization is further promoted by having the fuel pass through the gap created by the insertion of the jet needle 35b into the fuel injection supply hole 17f.

In the present embodiment, the fuel injection valve 25 is positioned coaxially with the fuel supply hole 17f, but it would also be possible, as shown by the double-dot lines in Figure 25, to position the fuel injection valve 25' at an angle with respect to the fuel supply hole in order to direct the fuel toward the upstream or downstream directions.

In cases where the fuel injection valve 25' were to inject the fuel toward the upstream or downstream areas, the fuel would strike the inside surface of the fuel injection hole 17f and then rebound and diffuse off the bottom surface of the free piston, thereby promoting better fuel atomization by facilitating its mixing with the air flow at the base of the free piston 35.

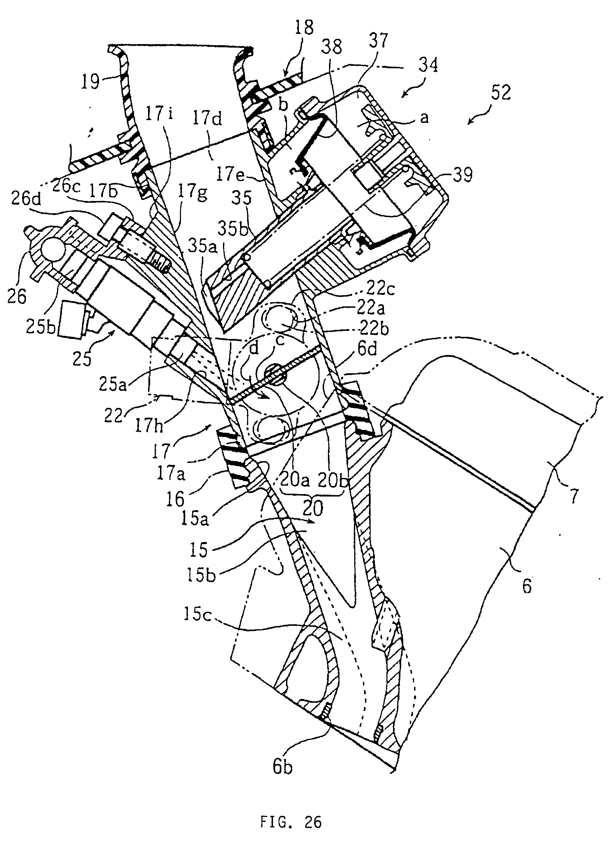

Figure 26 is a sectional side view to explain another embodiment (eleventh embodiment) which does not conform with all of the features of independent claim 1 but explains further features in view of the subject-matter of the present invention. In the Figure, parts similar to those shown in Figures 1 through 25 bear the same reference numbers.

In this eleventh embodiment, the foregoing damping valve 34 is placed in the ceiling wall 17e on the head cover 7 side of the throttle body 17 and its free piston 35 retracts and protrudes at an angle directed downstream inside a venturi passage (air intake passage). Further, there is a negative pressure feed hole 35b formed in the bottom surface of the free piston 35 which feeds the negative pressure of the air intake flow between the venturi passage's 17d bottom wall 17g and the bottom surface of said free piston into the negative pressure chamber *a*. While it is not shown in the Figures, the free pistons for embodiments 2 through 14 were also equipped with this negative pressure conduction hole.

Further, in the present embodiment, the fuel injection valve has been placed between the foregoing damping valve 34 and the throttle valve 20 in the bottom wall of the foregoing throttle body opposite the head cover. The injection nozzle 25a of the fuel injection valve directs the fuel downstream at an angle by means of a fuel injection hole 17h formed in the bottom wall 17g of the throttle body 17 and moreover, the fuel is directed toward the ceiling surface of the main port area 15b of the air intake port 15.

The fuel supply manifold 26 which is attached to the top ends of the foregoing fuel injection valves is affixed at its boss member 26c to the support boss area 17i of the throttle body 17 by means of bolts 26d. Thus, the fuel supply manifold 26 unitizes the four sets of throttle bodies 17.

The foregoing throttle valve 20 is of the butterfly type with a valve plate 20a affixed to a valve shaft 20b that has been rotatably inserted parallel to the camshaft to run across the venturi passage 17d of the throttle body 17. When the valve plate 20a is in the fully closed position, the bottom edge area 17g is positioned just downstream of the foregoing fuel injection hole 17h. Thus, when the throttle valve plate 20a is opened from its fully closed position, the throttle valve plate 2's bottom wall 17g moves away from the foregoing fuel injection hole 17h; in other words, it rotates counter clockwise (in the direction of arrow *d*) of Figure 26.

Generally, idling adjustments are made by opening the throttle valve 20 slightly from its fully closed idling position (generally 1 to 5°). Then, the angular attachment of the foregoing throttle sensor 22 can be zeroed to the throttle aperture after the idling adjustment has been performed.

In the present embodiment, the damping valve has been placed so that the free piston recedes and protrudes in the venturi passage 17d at such an angle that it tilts downstream. This structure reduces the friction resistance from the air operating against the free piston 35 to smooth the operation of said piston and reduce the air resistance caused by that free piston.

Furthermore, the throttle valve 20 is placed so that its valve plate 20 is lower horizontally than the injection nozzle 17h so that when operating at low aperture such as during idling, the fuel spray, which is directed toward the gap between the lower area of the valve plate 20a and the bottom surface of the air intake passage, flows into the engine. Since said gap is located on the same side as the bottom surface of the foregoing free piston 35, the high speed air moving past the bottom surface of the free piston 35 flowing directly through the foregoing gap to assure efficient mixing of the fuel, which improves combustion in the engine.

Further, a part of the injected fuel strikes the upstream-side surface c of the valve plate 20a and adheres to said surface c, but since this tendency does not change with increasing aperture of said valve plate 20a, the problem of any rapid change in the air/fuel ratio between low throttle aperture and high aperture is avoided. Incidentally, there may be cases, depending upon the positional relationships between the valve plate and the fuel injection valve, wherein the injected fuel would strike the upstream-side surface of the valve plate and adhere during low aperture operations, and strike the downstream-side surface and adhere during high aperture operations. Such a relationship would cause an unstable air/fuel ratio.

Further, the rotation of the throttle valve 20 has been set to rotate in the direction of arrow *d* in a manner such that the edge of the valve plate 20a on the fuel injection hole 17h-side becomes more distant from the injection hole 17h with increasing throttle aperture. Thus, when the valve plate 20a opens from the fully closed position, the problem of the volume of air intake increasing rapidly at one particular point is avoided. To wit, if the direction of rotation of the throttle valve in this embodiment where set to the reverse direction, the amount of intake air would rapidly increase when the edge of the valve plate reaches the injection hole. However, that problem has been avoided in this embodiment.

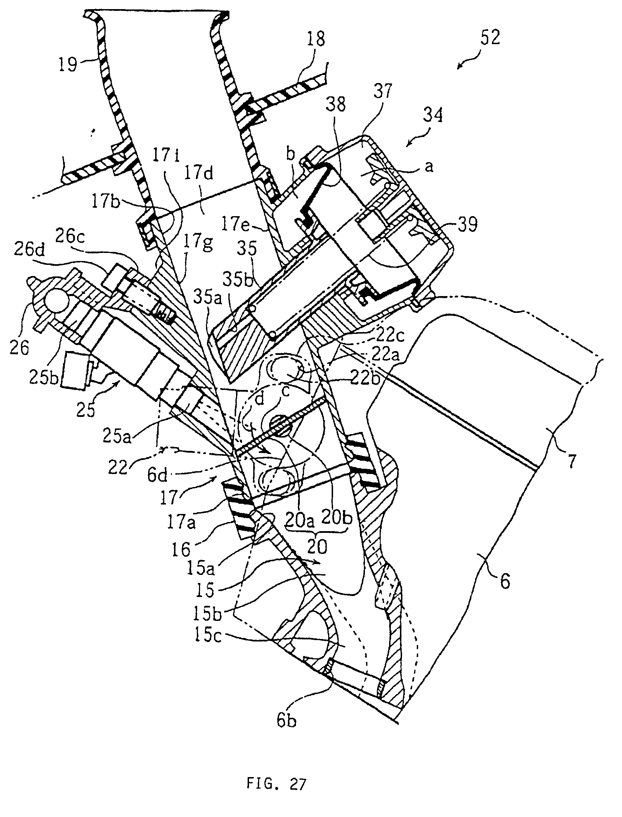

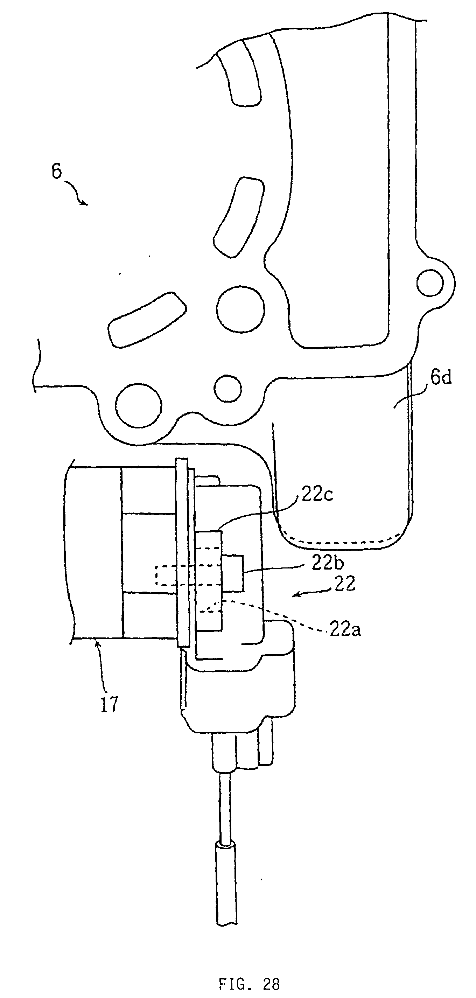

Figures 27, 28 show sectional side views of an air intake passage area of another embodiment (twelfth embodiment) which does not conform with all of the features of independent claim 1 but explains further features in view of the subject-matter of the present invention.

In the Figures, parts similar to those shown in Figures 1-26 bear the same reference numbers.

The structure of the twelfth embodiment is basically similar to that of the eleventh embodiment, but in this embodiment, the specific structure is such that the volume ratio, namely the volume from the air intake valve openings 6b as far as the throttle valve (port volume) to the stroke volume (the displacement per cylinder), is set to be lower, that is, in the above described range of 0.15 to 0.45.

To wit, the structure of the air intake unit 52, composed of the throttle body 17, damping valve 34, throttle valve 20 and fuel injection valve, is similar to that of the fifteenth embodiment.

However, in this embodiment, the air intake port is shorter, as shown in Figure 26, and its external connection opening 15a has been positioned in closer proximity to the air intake valve openings 6b. Thus, when the foregoing air intake unit 52 is viewed in the camshaft direction, a part of the throttle sensor 22 overlaps the chain chamber 6d where the timing chain that drives the camshafts is situated because of its close proximity to the air intake valve openings 6b. In this case, as shown in Figure 32, the throttle sensor, when viewed in the cylinder axis direction, is positioned inside the axis direction from the foregoing chain chamber 6d. This design avoids interference between the throttle sensor 22 and the chain chamber 6d.

Further, the free piston 35 of the damping valve 34 protrudes and recedes at an angle so that the entire damping valve is positioned on the upstream side. This design avoids interference between the damping valve 34 and the cylinder head 6, the head cover 7, etc., and it also enables the air intake unit 52 overall to be closer to the air intake valve openings 6b.

In a second implementation embodiment, the throttle sensor is positioned so that when viewed in the camshaft direction, a part of it overlaps the chain chamber 6d, and when viewed in the cylinder axis direction or the air intake passage direction, it is offset to the inside of the chain chamber 6d, and further, the damping valve 34 has been tilted, so that the air intake unit 52 is positioned in close proximity to the air intake valve openings 6b, making it possible to achieve an adequate reduction in the foregoing volume ratio, and to achieve low-cost exhaust gas cleansing without detracting from the engine output, also preventing loss of fire during no load racing and diminished operational feel of the engine.

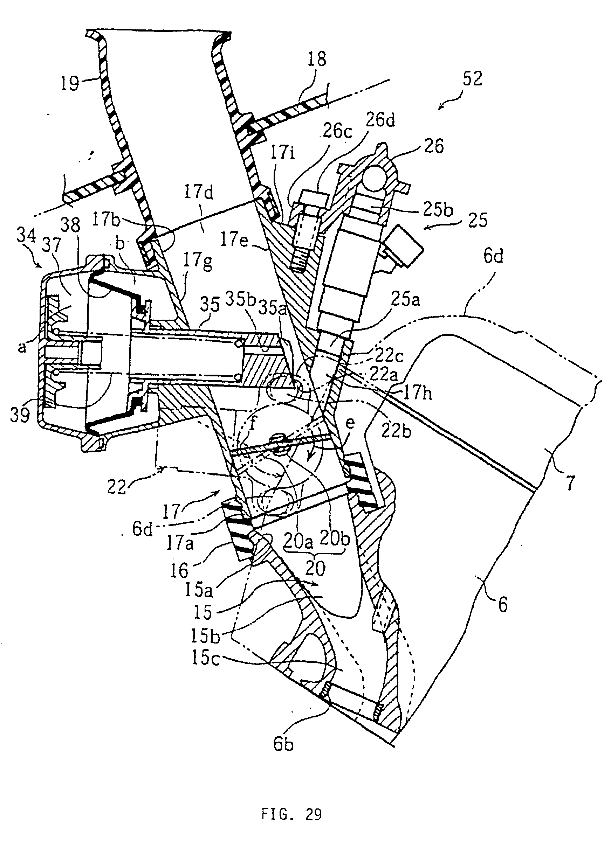

Figure 29 is a sectional view of the air intake passage area of another embodiment (thirteenth embodiment) which does not conform with all of the features of independent claim 1 but explains further features in view of the subject-matter of the present invention. In the Figure, parts similar to those shown in Figures 1-28 bear the same reference numbers.

The thirteenth embodiment is similar to the twelfth, but the air intake unit 52 has been reversed in the fore-aft direction and it is connected to the external connection opening 15a of the air intake port. To wit, the damping valve 34 is located in the bottom wall 17g and is positioned on the side near the opposite head cover of the foregoing throttle body 17. The free piston 35 retracts and protrudes from the bottom wall 17g into the venturi passage 17d at an angle tilting toward the downstream side.

With the opening of the throttle valve 20, the valve plate 20a turns away from the fuel injection hole 17h (in the direction of arrow *e*). The double-dot line shown in Figure 29 shows an alternative layout where the valve plate 20a of the throttle valve rotates counterclockwise in the direction of arrow *f*.

Further, the throttle sensor 22 is positioned in a manner similar to that in the example shown in Figure 27 so that when viewed in the camshaft direction, a part of it overlaps the chain chamber 6d, and when viewed in the cylinder axis direction or the air intake passage axial direction, it is offset to the inside of the axial direction of the chain chamber 6d.

In this thirteenth embodiment, the fuel injection valves 25 are located in the space between the air cleaner 18 and the head cover 7, allowing the running air flowing between said head cover 7 and air cleaner 18 to strike the fuel injection valves 25 and the fuel manifold 26, preventing the temperature rise of the fuel inside the fuel manifold 26 and the fuel injection valves 25, thereby preventing vaporization and allowing high accuracy metering of the fuel to assure stable combustion in the engine.

It is possible to use an air intake unit 52 having an identical structure for the foregoing embodiments 11 through 13. That design would meet the goal of having as many common parts as possible.

## Claims

1. A four-cycle internal combustion engine with an air intake apparatus comprising at least one air intake passage (15) for passing into a respective combustion chamber (6a), a throttle valve (20) disposed in said air intake passage (15), at least one fuel injection valve (25) being provided downstream of the throttle valve (20) on a side of said air intake passage (15), and a damping valve (34,40) being arranged upstream of the throttle valve (20) and providing a variable gap on a side of said air intake passage (15) to vary the cross section of said air intake passage (15) according to air intake conditions, and to dampen increased air intake flows resulting from an aperture of the foregoing throttle valve (20),
**characterized in that**, said fuel injection valve (25) is provided in close proximity to the throttle valve (20) and said fuel injection valve (25) and said variable gap are provided on the same side of the respective air intake passage (15).

2. A four-cycle internal combustion engine according claim 1, **characterized by** a sensor (22) to detect the throttle valve aperture, and a control unit (24), composed of an integrated ECU in an ECU case (23), said sensor is attached to a throttle body (17) that contains the throttle valve (20).

3. A four-cycle internal combustion engine according to claim 1 or 2, **characterized in that** said throttle valve (20) is provided in close proximity to air intake valve openings (6b) such that a volume ratio is minimized, said volume ratio is a ratio of a port volume constituted by the volume from the air intake valve openings (6b) up to the throttle valve (20) in the air intake passage (15), to a stroke volume constituted by the displacement of a piston (8) within one cylinder (5a) of said engine.

4. A four-cycle internal combustion engine according to claim 3, **characterized in that** said volume ratio being settable between 0.15 and 0.45.

5. A four-cycle internal combustion engine according to at least one of the claims 1 to 4, **characterized in that** the air intake passage (15) slopes at an angle of 30 to 60 degrees with respect to cylindrical axes of the engine, wherein the damping valve (34) is positioned in the ceilings of the air intake passage (15) toward the cylinder axis side, and wherein the foregoing fuel injection valves (25) are positioned in the bottom wall on the side opposite the cylinder axis.

6. A four-cycle internal combustion engine according to at least one of the claims 1 to 5, **characterized by** a plurality of sets of throttle bodies (17) that contain throttle valves (20) as well as fuel injection valves (25) being attached thereto.

7. A four-cycle internal combustion engine according to claim 6, **characterized in that** the fuel injection valves (25) in the plurality of sets of throttle bodies (17) are each connected to a common fuel supply manifold (26), and additionally, wherein the plurality of sets of throttle bodies (17) are unitized by means of said fuel supply manifold (26), wherein the fuel supply opening of said fuel supply manifold (26) comprises an attached fuel filter (51) and a fuel pressure regulator valve (30) attached at a fuel return opening.

8. A four-cycle internal combustion engine according to claim 7, **characterized in that** said fuel supply manifold (26) that supplies the high pressure fuel to the fuel injection valves (25) is located in a corner area formed by the bottom surface of an air cleaner (18) which is connected to the upstream end of the air intake passage (15) and the wall surface of the fuel tank.

9. A four-cycle internal combustion engine according to at least one of the claims 6 to 8, **characterized by** ram air pressure conducting passages (60) that conduct the air pressure resulting from the running air through the air intake passages (15), and throttle valves (20) installed amid the foregoing air intake passages (15), wherein damping valves (34) being provided upstream of the foregoing throttle valves (20) in the foregoing air intake passages (15) which can change the cross section of the air intake passage (15) on its upstream side to dampen the increased flow speed of the air that develops in response to the aperture of the foregoing throttle valves (20), wherein said damping valves (34) are composed of a free piston (35) which retracts into the air intake passage (15) in a direction approximately perpendicular to its axis, said free piston (35) having a working chamber (37) housed in the outer end area of the free piston (35) that is equipped with a diaphragm (38) which makes an airtight connection with the outside end of said free piston (35) and divides the foregoing working chamber (37) into a negative pressure chamber and positive pressure chamber, wherein negative intake pressure tapped in the area between the wall surfaces of the foregoing air intake passage (15) and the foregoing free piston (35) is introduced into the foregoing negative pressure chamber, and in addition, the foregoing ram air pressure is fed into the foregoing positive pressure chamber.

## Patentansprüche

1. Viertakt- Brennkraftmaschine mit einer Lufteinlaßvorrichtung, mit zumindest einem Lufteinlaßkanal (15) zum Durchgehen in eine jeweilige Brennkammer (6a), einem Drosselventil (20), angeordnet in dem Lufteinlaßkanal (15), zumindest einem Kraftstoffeinspritzventil (25), das stromab des Drosselventiles (20) auf einer Seite des Lufteinlaßkanales (15) angeordnet ist, und einem Dämpfungsventil (34, 40), das stromauf des Drosselventiles (20) angeordnet ist und das einen veränderbaren Spalt auf einer Seite des Einlaßkanales (15) vorsieht, um den Querschnitt des Lufteinlaßkanales (15) entsprechend der Lufteinlaßbedingungen zu variieren, und um erhöhte Einlaßluftströmungen, die aus einer Öffnung des vorhergehenden Drosselventiles (20) resultieren, zu dämpfen,
**dadurch gekennzeichnet, daß** das Kraftstoffeinspritzventil (25) in enger Nähe zu dem Drosselventil (20) vorgesehen ist und das Kraftstoffeinspritzventil (25) und der variable Spalt auf derselben Seite des jeweiligen Lufteinlaßkanales (15) vorgesehen sind.

2. Viertakt- Brennkraftmaschine nach Anspruch 1, **gekennzeichnet durch** einen Sensor (22), um die Drosselventilöffnung zu erfassen, und eine Steuereinheit (24), zusammengesetzt aus einer integrierten ECU in einem ECU- Gehäuse (23), wobei der Sensor mit einem Drosselkörper (17), der das Drosselventil (20) enthält, verbunden ist.

3. Viertakt- Brennkraftmaschine nach Anspruch 1 oder 2, **dadurch gekennzeichnet, daß** das Drosselventil (20) in enger Nähe zu den Lufteinlaßventilöffnungen (6b) vorgesehen ist, so daß ein Volumenverhältnis minimiert ist, wobei das Volumenverhältnis ein Verhältnis eines Öffnungsvolumens ist, gebildet durch das Volumen der Lufteinlaßventilöffnungen (6b) bis zu dem Drosselventil (20) in dem Lufteinlaßkanal (15), zu einem Hubvolumen, gebildet durch eine Verlagerung eines Kolbens (8) innerhalb eines Zylinders (5a) des Motors.

4. Viertakt- Brennkraftmaschine nach Anspruch 3, **dadurch gekennzeichnet, daß** das Volumenverhältnis zwischen 0,15 und 0,45 festlegbar ist.

5. Viertakt- Brennkraftmaschine nach zumindest einem der Ansprüche 1 bis 4, **dadurch gekennzeichnet, daß** der Lufteinlaßkanal (15) unter einem Winkel von 30 bis 60 Grad in Bezug zu den Zylinderachsen des Motors geneigt ist, wobei das Dämpfungsventil (34) in den Decken des Lufteinlaßkanales (15) in Richtung der Seite der Zylinderachse positioniert ist, und wobei die vorhergehenden Kraftstoffeinspritzventile (25) in der Bodenwand an der der Zylinderachse gegenüberliegenden Seite positioniert sind.

6. Viertakt- Brennkraftmaschine nach zumindest einem der Ansprüche 1 bis 5, **gekennzeichnet durch** eine Mehrzahl von Sätzen von Drosselkörpern (17), die Drosselventile (20), sowie mit diesen verbundene Kraftstoffeinspritzventile (25), enthalten.

7. Viertakt- Brennkraftmaschine nach Anspruch 6, **dadurch gekennzeichnet, daß** die Kraftstoffeinspritzventile (25) in der Mehrzahl von Sätzen von Drosselkörpem (17) jeweils mit einem gemeinsamen Kraftstoffzuführungsverteiler (26) verbunden sind, und zusätzlich, wobei die Mehrzahl von Sätzen von Drosselkörpern (17) mittels des Kraftstoffzuführungsverteilers (26) vereinheitlicht ist, wobei die Kraftstoffzuführungsöffnung des Kraftstoffzuführungsverteilers (26) einen verbundenen Kraftstofffilter (51) aufweist und ein Kraftstoffdruckregulierungsventil (30), verbunden mit einer Kraftstoffrückführungsöffnung, aufweist.

8. Viertakt- Brennkraftmaschine nach Anspruch 7, **dadurch gekennzeichnet, daß** der Kraftstoffzuführungsverteiler (26), der den Hochdruckkraftstoff zu den Kraftstoffeinspritzventilen (25) zuführt, in einem Eckbereich, gebildet durch die Bodenfläche eines Luftreinigers (18), der mit dem stromaufwärtigen Ende des Lufteinlaßkanales (15) verbunden ist und der Wandfläche des Kraftstofftanks.

9. Viertakt- Brennkraftmaschine nach zumindest einem der Ansprüche 6 bis 8, **gekennzeichnet durch** Raumluftdruck- Führungskanäle (60), die den Luftdruck, der aus der durchströmenden Luft **durch** die Lufteinlaßkanäle (15) resultiert, leiten, und Drosselventile (20), installiert inmitten der vorhergehenden Lufteinlaßkanäle (15), wobei Dämpfungsventile stromauf der vorhergehenden Drosselventile (20) in den vorhergehenden Lufteinlaßkanälen (15) vorgesehen sind, die den Querschittsbereich des Lufteinlaßkanales (15) auf seiner stromaufwärtigen Seite verändern können, um die erhöhte Strömungsgeschwindigkeit der Luft zu dämpfen, die sich in Abhängigkeit der Öffnung der vorhergehenden Drosselventile (20) entwickelt, wobei die Dämpfungsventile (34) aus einem freien Kolben (35) bestehen, der sich in den Lufteinlaßkanal (15) in einer Richtung ungefähr rechtwinklig zu seiner Achse zurückzieht, wobei der freie Kolben (35) eine Arbeitskammer (37) hat, untergebracht in dem äußeren Endbereich des freien Kolbens (35), die mit einer Zwischenwand (38) ausgerüstet ist, die eine luftdichte Verbindung mit dem außenseitigen Ende des freien Kolbens (35) schafft und die vorhergehende Arbeitskammer (37) in eine Negativdruckkammer und eine Positivdruckkammer teilt, wobei der negative Einlaßdruck abgegriffen in dem Bereich zwischen den Wandoberflächen des vorhergehenden Lufteinlaßkanales (15) und dem vorhergehenden freien Kolben (35), in die vorhergehende Negativdruckkammer eingeführt wird, und zusätzlich der vorhergehende Raumluftdruck in die vorhergehende Positivdruckkammer zugeführt wird.

## Revendications

1. Moteur à combustion interne à quatre temps comportant un appareil d'admission d'air comprenant au moins un passage d'admission d'air (15) destiné à le faire passer à l'intérieur d'une chambre de combustion respective (6a), un papillon des gaz (20) disposé dans ledit passage d'admission d'air (15), au moins un clapet d'injection de carburant (25) qui est disposé en aval du papillon des gaz (20) sur un côté dudit passage d'admission d'air (15), et un clapet d'amortissement (34, 40) qui est aménagé en amont du papillon des gaz (20) et qui procure un espace variable sur un côté dudit passage d'admission d'air (15) afin de modifier la section transversale dudit passage d'admission d'air (15) en fonction des conditions d'admission d'air, et afin d'amortir l'augmentation des flux d'admission d'air qui résultent d'une ouverture du papillon des gaz mentionné précédemment (20),
**caractérisé en ce que**, ledit clapet d'injection de carburant (25) est disposé à une proximité très proche du papillon des gaz (20) et en **en ce que** ledit clapet d'injection de carburant (25) et ledit espace variable sont disposés sur le même côté du passage d'admission d'air respectif (15).

2. Moteur à combustion interne à quatre temps selon la revendication 1, **caractérisé par** un détecteur (22) destiné à détecter l'ouverture du papillon des gaz, et par une unité de commande (24) se composant d'une ECU (unité électronique de commande) intégrée placée dans un carter d'ECU, ledit détecteur étant fixé sur un corps de papillon des gaz (17) qui contient le papillon des gaz (20).

3. Moteur à combustion interne à quatre temps selon la revendication 1 ou 2, **caractérisé en ce que** ledit papillon des gaz (20) est disposé à une proximité très proche d'ouvertures de clapet d'admission d'air (6b) de sorte qu'un rapport volumétrique est réduit au minimum, ledit rapport volumétrique étant un rapport entre un volume à un orifice constitué par le volume en provenance des ouvertures de clapets d'admission d'air (6b) jusqu'au papillon des gaz (20) dans le passage d'admission d'air (15) et un volume de course constitué par le déplacement d'un piston (8) à l'intérieur d'un cylindre (5a) dudit moteur.

4. Moteur à combustion interne à quatre temps selon la revendication 3, **caractérisé en ce que** ledit rapport volumétrique peut être ajusté entre 0,15 et 0,45.

5. Moteur à combustion interne à quatre temps selon au moins l'une des revendications 1 à 4, **caractérisé en ce que** le passage d'admission d'air (15) a une inclinaison suivant un angle de 30 à 60 degrés par rapport aux axes des cylindres du moteur, dans lequel le clapet d'amortissement (34) est positionné dans les parois supérieures du passage d'admission d'air (15) vers le côté de l'axe de cylindre, et dans lequel les clapets d'injection de carburant (25) qui précèdent sont positionnés dans la paroi inférieure sur le côté opposé de l'axe du cylindre.

6. Moteur à combustion interne à quatre temps selon au moins l'une des revendications 1 à 5, **caractérisé par** une pluralité de jeux de corps de papillon des gaz (17) qui contiennent des papillons des gaz (20) de même que des clapets d'injection de carburant (25) qui sont fixés sur ceux-ci.

7. Moteur à combustion interne à quatre temps selon la revendication 6, **caractérisé en ce que** les clapets d'injection de carburant (25) dans la pluralité de jeux de corps de papillon de gaz (17) sont chacun connectés à une rampe commune d'alimentation en carburant (26), et de plus, dans lequel la pluralité de jeux de corps de papillon des gaz (17) est unifiée à l'aide de ladite rampe d'alimentation en carburant (26), dans lequel l'ouverture d'alimentation en carburant de ladite rampe d'alimentation en carburant (26) comprend un filtre à carburant (51) fixé sur celle-ci et un clapet régulateur de pression de carburant (30) fixé sur une ouverture de retour de carburant.

8. Moteur à combustion interne à quatre temps selon la revendication 7, **caractérisé en ce que** ladite rampe d'alimentation en carburant (26) qui fournit le carburant sous haute pression aux clapets d'injection de carburant (25) est située dans une zone en angle formée par la surface inférieure d'un filtre à air (18) qui est connecté à l'extrémité amont du passage d'admission d'air (15) et à la surface de la paroi du réservoir de carburant.

9. Moteur à combustion interne à quatre temps selon au moins l'une des revendications 6 à 8, **caractérisé par** des passages (60) conducteurs d'air sous pression dynamique qui conduisent de l'air sous pression résultant de l'air qui passe au travers des passages d'admission d'air (15), et des papillons de gaz (20) installés entre les passages d'admission d'air qui précèdent (15), dans lequel des clapets d'amortissement (34) sont disposés en amont des papillons des gaz (20) dans les passages d'admission d'air qui précèdent (15) qui peuvent modifier la section transversale du passage d'admission d'air (15) du côté amont de celui-ci afin d'amortir l'augmentation de la vitesse d'écoulement d'air qui se développe en réponse à l'ouverture des papillons des gaz (20) qui précèdent, dans lequel lesdits clapets d'amortissement (34) se composent d'un piston libre (35) qui se rétracte à l'intérieur du passage d'admission d'air (15) dans une direction approximativement perpendiculaire à son axe, ledit piston libre (35) comportant une chambre de travail (37) logée dans la zone d'extrémité externe du piston libre (35) qui est équipée d'un diaphragme (38) qui réalise une connexion étanche à l'air avec l'extrémité externe dudit piston libre (35) et qui divise la chambre de travail (37) qui précède en une chambre à pression négative et une chambre à pression positive, dans lesquelles la pression négative d'admission en dérivation dans la zone située entre les surfaces de paroi du passage d'admission d'air (15) qui précède et le piston libre (35) qui précède est introduite à l'intérieur de la chambre à pression négative qui précède, et de plus, la pression dynamique de l'air est fournie à l'intérieur de la chambre de pression positive qui précède.
